# EUROPÄISCHE PATENTSCHRIFT

(11) **EP 3 222 649 B1**
(45) Veröffentlichungstag und Bekanntmachung des Hinweises auf die Patenterteilung: **18.04.2018**
(21) Anmeldenummer: 16161807.9
(22) Anmeldetag: 23.03.2016
(51) Int. Cl.: C08G 69/26, C08L 77/06

(54) **HOCHTEMPERATURBESTÄNDIGE POLYAMIDFORMMASSEN UND DEREN VERWENDUNGEN INSBESONDERE IM AUTOMOBILBEREICH**
HIGH TEMPERATURE RESISTANT POLYAMIDE MOULDING MASSES AND THEIR APPLICATION, IN PARTICULAR IN THE FIELD OF AUTOMOBILES
MASSES MOULEES EN POLYAMIDE RESISTANTES AUX TEMPERATURES ELEVEES ET LEURS UTILISATIONS EN PARTICULIER DANS LE DOMAINE AUTOMOBILE

(43) Veröffentlichungstag der Anmeldung: 27.09.2017
(73) Patentinhaber: EMS-PATENT AG, 7013 Domat / Ems (CH)
(72) Erfinder: HEWEL, Manfred, 7013 Domat/Ems (CH); STÖPPELMANN, Georg, 7402 Bonaduz (CH); THOMAS, Oliver, 7013 Domat/Ems (CH); LAMBERTS, Nikolai, 7402 Bonaduz (CH)
(74) Vertreter: Bremi, Tobias Hans

(56) Entgegenhaltungen:
- EP-A1- 2 666 803
- EP-A1- 2 746 339
- EP-A2- 0 488 335
- US-A1- 2012 196 973

## Beschreibung

### TECHNISCHES GEBIET

Die vorliegende Erfindung betrifft hochtemperaturbeständige Polyamidformmassen mit verbesserter Hydrolysebeständigkeit, insbesondere geeignet für den Kontakt mit Kühlflüssigkeiten bei hoher Temperatur zum Beispiel im Automobilbereich.

### STAND DER TECHNIK

Teilkristalline, teilaromatische Polyamide oder Copolyamide wurden für die Verwendung in Hochtemperaturumgebungen entwickelt und zeichnen sich, insbesondere bei einem Gehalt von mindestens 50 Mol-% Terephthalamideinheiten, durch ihre besonders guten thermo-mechanischen Eigenschaften aus. Der Schmelzpunkt derartiger Polyamide liegt typischerweise im Bereich von 270 bis 330°C, wobei Schmelzpunkte oberhalb von 320°C bei langen Verweilzeiten in der Verarbeitungsmaschine wegen der hohen erforderlichen Verarbeitungstemperaturen problematisch werden können.

Anspruchsvolle Anwendungen im Bereich Automobil und insbesondere im Kontakt mit Kühlflüssigkeit (Wasser, Glykol) fordern darüber hinaus eine gute Hydrolysebeständigkeit bei Temperaturen von grösser oder gleich 130°C weiter hinaus eine gute Hitzebeständigkeit und gute mechanische Eigenschaften, wie dies beispielsweise die GM-Norm GMW16360 für glasfaserverstärkte Polyphthalamide fordert.

Für solche Anwendungen geeignete Materialien müssen eine geringe Wasseraufnahme aufweisen, da andernfalls die erforderliche Dimensionsstabilität nicht gewährleistet ist. Zudem müssen die Materialien auch zu komplexen Formen verarbeitbar sein. So gibt es insbesondere im Bereich der Anwendungen im Automobilbereich für Behälter und Leitungen sowie Übergangsstücke etc. im Kühlsystem immer wieder schwierige Formen der Bauteile mit Hinterschnitten etc. Damit derartige Formen überhaupt realisiert werden können, müssen die verwendeten Materialien, ob nun mit Glasfasern verstärkt oder nicht, auch geeignet sein, aus dem entsprechend komplexen Spritzgusswerkzeug schadlos herausgenommen werden zu können. Diesbezüglich relevant ist entsprechend das Verhalten des frisch geformten Formteils bei der Formtemperatur. Das Formteil muss bei dieser Temperatur noch eine genügende Biegsamkeit aufweisen, damit es schadlos entnommen werden kann. Dafür kennzeichnende Parameter sind die Steifigkeit, die Bruchfestigkeit und vor allem die Bruchdehnung bei der Formtemperatur.

Polyamid PA6T/6I (70:30) erfüllt zwar die genannte GM-Norm hinsichtlich der Lagerung in einem Glykol/Wasser-Gemisch bei 130°C über 1008 Stunden, hat aber bei einer Formtemperatur von 130°C eine zu hohe Steifigkeit und zu geringe Bruchdehnung, als dass Formteile mit einer Hinterschneidung zerstörungsfrei entformt werden könnten und mit einem Schmelzpunkt von 325°C ist die Verarbeitung bei langen Verweilzeiten in der Verarbeitungsmaschine problematisch. Eine Flexibilisierung lässt sich bei diesem Polyphthalamid beispielsweise durch Integration von aliphatischen 66-Einheiten, gebildet aus 1,6-Hexandiamin und Adipinsäure, erreichen, so dass Copolyamide des Typs PA6T/6I/66 gut bei einer Formtemperatur von 130°C entformbar sind. Allerdings wird durch diese Modifizierung die Hydrolyse- und die Dimensionsbeständigkeit so stark reduziert, dass die GM-Norm GMW16360 nicht mehr erfüllt wird.

Aus der EP-A-488335A2 sind Formmassen auf Basis eines aromatischen Polyamids für die Herstellung von elektrischen Steckern bekannt, umfassend 50 bis 100 mol% wiederkehrender Einheiten abgeleitet von Terephthalsäure und 0 bis 50 mol% wiederkehrender Einheiten abgeleitet von einer aromatischen Dicarbonsäure, die von Terephthalsäure verschieden ist und/oder einer aliphatischen Dicarbonsäure mit 4 bis 20 Kohlenstoffatomen und Diamineinheiten, abgeleitet von einem aliphatischen Diamin und/oder einem alicyclischen Diamin, wobei das aromatische Polyamid eine intrinsische Viskosität von 0,5 bis 3,0 dl/g, gemessen in konzentrierter Schwefelsäure und einen Schmelzpunkt von mehr als 300°C hat. Die Formmassen enthalten des Weiteren ein spezifisches pfropfmodifiziertes Olefinpolymer oder Dien-Copolymer und ein aliphatisches Polyamid als Blendkomponenten. Die in den Beispielen gearbeiteten unverstärkten Formmassen beruhen auf den Systemen PA 6T/6I, PA 6T/66 und PA 6T/6I/610. Allerdings erfüllen diese Formmassen die oben erwähnten Anforderungen für Anwendungen im Bereich Kühlflüssigkeit nicht, es geht bei dieser Offenbarung ohnehin nicht um Hydrolysebeständigkeit oder den Transport von Kühlflüssigkeiten.

Aus der EP-A-2 746 339 sind wärmealterungsbeständige Polyamid-Formmassen auf Basis teilkristalliner, teilaromatischer Polyamide des Typs 6T/6I/6 oder 6T/6I/66 bekannt sowie hieraus hergestellte Formkörper.

Aus der US-A-2012196973 sind thermoplastische Zusammensetzungen mit dem Aufbau 612/6T und 610/6T bekannt, wobei die aliphatischen Blöcke immer den Hauptteil ausmachen,

Aus der EP-A-2 666 803 sind transparente Formmassen des Typs MACM12/MACMIMACMT/12 bekannt, die besonders kratzfest sind.

### DARSTELLUNG DER ERFINDUNG

Der Erfindung liegt damit u.a. die Aufgabe zugrunde, eine verbesserte Formmasse zur Herstellung eines Formkörpers insbesondere im Automobilbereich zur Verfügung zu stellen. Damit besonders eine verbesserte Formmasse, welche eine hohe Hydrolysebeständigkeit im Kontakt mit Glykol-Wasser-Gemischen (Kühlmittel) bei hoher Temperatur aufweist. Hierbei sollen mindestens die Anforderungen gemäss GMW16360 erfüllt werden. D.h. die Bruchfestigkeit (stress at break) und die Bruchdehnung (strain at break) nach 1008 Stunden Lagerung in einem Gemisch aus Glykol und Wasser (1:1) bei 130°C (gemäss GMW15468, ISO 527-1/2) soll für einen Verstärkungsgrad von 35% wenigstens 110 MPa (Bruchfestigkeit) respektive 1.5 % (Bruchdehnung) sein und für einen Verstärkungsgrad von 45% wenigstens 120 MPa (Bruchfestigkeit) respektive 2.0 % (Bruchdehnung). Alternativ oder zusätzlich sollen mindestens die Anforderungen gemäss GMW16360 für etwas kürzere Lagerung erfüllt werden. D.h. die Bruchfestigkeit (stress at break) und die Bruchdehnung (strain at break) nach 504 Stunden Lagerung in einem Gemisch aus Glykol und Wasser (1:1) bei 130°C (gemäss GMW15468, ISO 527-1/2) soll für einen Verstärkungsgrad von 35% wenigstens 105 MPa (Bruchfestigkeit) respektive 2.0 % (Bruchdehnung) sein und für einen Verstärkungsgrad von 45% wenigstens 130 MPa (Bruchfestigkeit) respektive 2.5 % (Bruchdehnung)

Bevorzugt sollen aber die Normvorgaben betreffend die Bruchfestigkeit und die Bruchdehnung nach 1008 Stunden Lagerung und/oder 504 Stunden Lagerung in einem Gemisch aus Glykol und Wasser (1:1) bei 130 °C übertroffen werden, d.h. die Bruchfestigkeit soll für einen Verstärkungsgrad von 35% wenigstens 120 MPa und für einen Verstärkungsgrad von 45 % wenigstens 140 MPa, die Bruchdehnung soll für einen Verstärkungsgrad von 35 % oder 45 % wenigstens 2.3 % sein (Lagerung 1008 Stunden) oder wenigstens 2.7 % (Lagerung 504 Stunden).

Darüber hinaus soll die Formmasse eine gute Dimensionsstabilität aufweisen, was für die beabsichtigten Anwendungen im Automobilbereich bei einer Wasseraufnahme von vorzugsweise weniger als 3.7% oder weniger als 3.5 % erfüllt wird. Zusätzlich sollen die Formkörper hergestellt aus der erfindungsgemässen Formmasse auch bei anspruchsvollen Geometrien wie z.B. Hinterschneidungen gut aus dem Werkzeug entformbar sein. Die gute Entformbarkeit wird gewährleistet, wenn die Formmasse eine Bruchdehnung von vorzugsweise wenigstens 6.0 %, bevorzugt von wenigstens 6.5 % und besonders bevorzugt von wenigstens 7.0 %, jeweils bei einer Formtemperatur von 130°C, aufweist (diese Werte für die Bruchdehnung sind zu verstehen ohne die vorgängige Lagerung des Testkörpers in Glykol-Wassergemisch). Damit die Formmassen optimal verarbeitet werden können, sollte weiterhin vorzugsweise der Schmelzpunkt der Basispolymere als auch der Formmassen eine Temperatur von 315°C nicht übersteigen.

Gelöst wird diese Aufgabe durch eine Polyamidformmasse, wie sie in den Ansprüchen definiert ist, respektive durch Formteile, wie sie in den Ansprüchen definiert werden.

Konkret betrifft die vorliegende Erfindung eine thermoplastische Polyamidformmasse bestehend aus den folgenden Bestandteilen (A)-(E):
(A) 40 - 70 Gew.-% mindestens eines teilkristallinen, teilaromatischen Polyamids, aufgebaut aus:
   (a1) 60 bis 75 Gew.-% 6T-Einheiten, gebildet aus 1,6-Hexandiamin und Terephthalsäure;
   (a2) 20 bis 35 Gew.-% 6I-Einheiten, gebildet aus 1,6-Hexandiamin und Isophthalsäure;
   (a3) 3 bis 15 Gew.-% 612-Einheiten, gebildet aus 1,6-Hexandiamin und Dodecandisäure;
   (a4) 0 bis 5 Gew.-% einer der folgenden Einheiten: 66-Einheiten, gebildet aus 1,6-Hexandiamin und Adipinsäure; 68-Einheiten, gebildet aus 1,6-Hexandiamin und Korksäure; 69-Einheiten gebildet aus 1,6-Hexandiamin und Azelainsäure; 610-Einheiten gebildet aus 1,6-Hexandiamin und Sebacinsäure; 6-Einheiten gebildet aus ε-Caprolactam; oder einer Mischung/Kombination derartiger Einheiten;
   wobei die Summe der Komponenten (a1) bis (a4) 100 Gew.-% des Polyamids (A) ausmacht;
(B) 30 - 60 Gew.-% faserförmige Verstärkungsstoffe;
(C) 0 - 30 Gew.-% partikuläre Füllstoffe verschieden von (B), (D) und (E));
(D) 0-2.0 Gew.-% Hitzestabilisatoren;
(E) 0 - 6 Gew.-% Hilfsstoffe und/oder Additive, verschieden von (A)-(D);
wobei die Summe der Komponenten (A)-(E) 100 Gew.-% ausmacht.

Dokumente des Standes der Technik beschreiben keine Polyamidformmasse mit der beanspruchten Zusammensetzung, geschweige denn die Eignung einer solchen Polyamidformmasse für den Bereich von Formteilen im Kühlwasserbereich, und die völlig anders gelagerten Verwendungen in Dokumenten mit nahe kommenden chemischen Zusammensetzungen können eine solche Eignung auch nicht nahe legen. Insbesondere können sie den Fachmann nicht vermuten lassen, dass eine solche Formmasse dazu in der Lage ist, die für derartige Anwendungen hervorragende Hydrolysebeständigkeit bei einer Temperatur von wenigstens 130°C zu erreichen.

Für die Eigenschaften der Polyamidformmasse spielt in gewissem Umfang auch die Gesamtheit der rein aliphatischen Blöcke innerhalb der **Komponente (A)** für die oben genannte Eigenschaftenkombination eine Rolle. Gemäss einer weiteren bevorzugten Ausführungsform ist entsprechend die Komponente (A) dadurch gekennzeichnet, dass die Summe der Blöcke (a3) und (a4), bezogen auf die 100 Gew.-% des Polyamids (A), im Bereich von 5-15 Gew.-% liegt, vorzugsweise im Bereich von 8-12 Gew.-%.

Gemäss einer ersten bevorzugten Ausführungsform ist die Polyamidformmasse dadurch gekennzeichnet, dass das teilkristalline, teilaromatische Polyamid der Komponente (A) hinsichtlich 6T Einheiten aufgebaut ist aus: (a1) 60 bis 70 Gew.-%, vorzugsweise 62-68 Gew.-%, insbesondere vorzugsweise 63-66 Gew.-%, 6T-Einheiten, gebildet aus 1,6-Hexandiamin und Terephthalsäure.

Hinsichtlich 6I Einheiten ist es gleichzeitig oder unabhängig davon vorzugsweise aufgebaut aus: (a2) 20 bis 30 Gew.-%, vorzugsweise 23-29 Gew.-%, insbesondere vorzugsweise 24-27 Gew.-%, 6I-Einheiten, gebildet aus 1,6-Hexandiamin und Isophthalsäure.

Hinsichtlich 612-Einheiten ist die Komponente (A) gleichzeitig oder unabhängig von den oben angegebenen Einstellungen für (a1) und/oder (a2) vorzugsweise aufgebaut aus: (a3) 4 bis 15 Gew.-%, vorzugsweise 5-13 Gew.-%, insbesondere vorzugsweise 7-13 oder 8-12 Gew.-%, 612-Einheiten, gebildet aus 1,6-Hexandiamin und Dodecandisäure.

Hinsichtlich weiteren aliphatischen Einheiten (a4) ist die Komponente (A) gleichzeitig oder unabhängig von den oben angegebenen Einstellungen für (a1)-(a3) vorzugsweise aufgebaut aus: (a4) 0 bis 5 Gew.-%, vorzugsweise 0-4 Gew.-%, insbesondere vorzugsweise 0.5-3 oder 1-3 Gew.-%, einer der folgenden Einheiten: 66-Einheiten, gebildet aus 1,6-Hexandiamin und Adipinsäure; 68-Einheiten, gebildet aus 1,6-Hexandiamin und Korksäure; 69-Einheiten gebildet aus 1,6-Hexandiamin und Azelainsäure; 610-Einheiten gebildet aus 1,6-Hexandiamin und Sebacinsäure; 6-Einheiten gebildet aus ε-Caprolactam; oder einer Mischung derartiger Einheiten. Insbesondere bevorzugt ist die Komponente (A) frei von Einheiten (a4), d.h. umfasst ausschliesslich die Einheiten (a1)-(a3).

In jeder der oben angegebenen bevorzugten Ausführungsformen für die Anteile der Komponenten (a1)-(a4) gilt, dass die Summe der Komponenten (a1) bis (a4) 100 Gew.-% des Polyamids (A) ausmacht.

Hinsichtlich Bestandteil (a4) des teilkristallinen, teilaromatischen Polyamids der Komponente (A) gilt gemäss einer weiteren bevorzugten Ausführungsform, dass es sich dabei um eine der Einheiten ausgewählt aus der folgenden Gruppe handelt: 66-Einheiten, gebildet aus 1,6-Hexandiamin und Adipinsäure; 6-Einheiten gebildet aus ε-Caprolactam; oder eine Mischung derartiger Einheiten, wobei vorzugsweise der Bestandteil (a4) ausschliesslich durch 66-Einheiten, gebildet aus 1,6-Hexandiamin und Adipinsäure, gegeben ist, vorzugsweise in einem Anteil im Bereich von 0-5 Gew.-%, vorzugsweise 0-4 Gew.-% , insbesondere vorzugsweise 0.5-3 Gew.-%.

Die Einstellung der Molmasse des ternären Copolyamids 6T/6I/612 bzw. des Copolyamids 6T/6I/(a4)/612 sowie deren Endgruppen kann erfolgen durch
i. einen Überschuss an 1,6-Hexandiamin oder
ii. einem Überschuss an den verwendeten Dicarbonsäuren Terephthalsäure, Isophthalsäure, Dodecandisäure, Sebacinsäure, Azelainsäure, Korksäure und Adipinsäure
iii. oder durch Einsatz von monofunktionellen Aminen
iv. oder durch Einsatz von monofunktionellen Carbonsäuren.

Dabei kann die Art der Reglung auch in einer Kombination von (i) oder (ii) mit (iii) und/oder (iv) bestehen. Bevorzugt verwendet wird eine Reglung aus der Kombination von (i) mit (iv). Hierbei findet mindestens eine aliphatische, cycloaliphatische oder aromatische monofunktionelle Carbonsäure Verwendung, bevorzugt eine aromatische Monocarbonsäure, wobei die Konzentration der monofunktionellen Carbonsäure im Bereich von 0.5 bis 5 Mol-%, bevorzugt 1.0 bis 2.5 mol-% und besonders bevorzugt im Bereich von 1.4 bis 1.9 Mol-% bezogen auf den Gehalt an 1,6-Hexandiamin liegt. Konkret bedeutet dies bevorzugtermassen, dass das Mol-Verhältnis der monofunktionellen Carbonsäure zu 1,6-Hexandiamin im Bereich von 0.005-0.05, vorzugsweise im Bereich von 0.010 bis 0.025, insbesondere vorzugsweise im Bereich von 0.014-0.019 liegt.

Gemäss einer weiteren bevorzugten Ausführungsform der Erfindung ist die monofunktionelle Carbonsäure ausgewählt aus der Gruppe bestehend aus: Essigsäure, Propionsäure, Stearinsäure, 2-Ethylhexansäure, Cyclohexansäure und Benzoesäure oder Mischungen davon.

Weiterhin ist bevorzugt, wenn das Mol-Verhältnis von 1,6-Hexandiamin zur Summe der eingesetzten Dicarbonsäuren wenigstens 1.01, insbesondere wenigstens 1.03 ist. D.h., bei der Polymerisation werden die Ausgangsstoffe so eingesetzt, dass ein Diamin-Überschuss vorhanden ist. Vorzugsweise ist das Mol-Verhältnis 1,6-Hexandiamin zur Summe der eingesetzten Dicarbonsäuren höchstens 1.15. Bevorzugte Bereiche für das Verhältnis Diamin zu Dicarbonsäuren sind 1.03 bis 1.10, insbesondere 1.04 bis 1.08.

Das ternäre Copolyamid 6T/6I/612 bzw. wenigstens quaternäre Copolyamid 6T/6I/(a4)/612 wird bevorzugt aufgebaut unter Zuhilfenahme einer bevorzugt anorganischen oder organischen Phosphorverbindung, wobei der Phosphorgehalt bezogen auf den wasserfreien Ansatz (Summe aller Einwaagen ohne Wasser, d.h. Summe aller Monomere der Komponenten (a1) bis (a4)) im Bereich von 40 - 400 ppm (ppm jeweils gewichtsbezogen), bevorzugt 60 - 300 ppm und insbesondere im Bereich von 70 bis 150 ppm liegt. Bevorzugte Phosphorverbindungen sind Phosphorsäure, phosphorige Säure, hypophosphorige Säure, Phenylphosphonsäure, Phenylphosphinsäure und/oder deren Salze mit 1- bis 3-wertigen Kationen wie z.B. Na, K, Mg, Ca, Zn oder Al und/oder deren Ester wie Triphenylphosphat, Triphenylphosphit oder Tris-(nonylphenyl)-phosphit oder Mischungen davon. Insbesondere bevorzugt werden die hypophosphorige Säure und Natriumhydrogenhypophosphit Monohydrat.

Die vorliegende Erfindung betrifft entsprechend gleichermassen ein **Verfahren** zur Herstellung einer Polyamidformmasse, wie sie oben beschrieben wurde und wie sie weiter unten auch noch weiter detailliert werden wird, welches Verfahren dadurch gekennzeichnet ist, dass entweder 1,6-Hexandiamin, Terephthalsäure, Isophthalsäure, und Dodecandisäure sowie gegebenenfalls weitere aliphatische Dicarbonsäuren oder Lactame, ausgewählt aus der Gruppe Adipinsäure (C6), Korksäure (C8), Azelainsäure (C9) Sebazinsäure (C10), und/oder ε-Caprolactam (C6) als Monomere sowie weitere Ausgangsmaterialien wie insbesondere Regler, Katalysatoren, Wasser etc., vorgelegt werden, gegebenenfalls als Salze des Diamins mit den entsprechenden Disäuren, und in einem einstufigen Verfahren oder in einem 2-stufigen Verfahren mit Vorkondensat-Bildung in der 1. Stufe und abschliessender Polymerisation in der 2. Stufe zur Komponente (A) polymerisiert werden und anschliessend oder im Rahmen der genannten 2. Stufe die weiteren Bestandteile (B)-(E) hinzugefügt werden.

Alternativ kann das Verfahren in mehr als zwei Stufen durchgeführt werden. So können die Bestandteile a1 bis a4 auch einzeln und/oder in Kombination, jeweils in Form vorgeformter Blöcke im Sinne von Vorkondensaten (vorzugsweise mit einer zahlenmittleren Molmasse von 500 bis 5000 g/mol, vorzugsweise von 500 bis 3000 g/mol, insbesondere im Bereich von 500 bis 2500 g/mol, und/oder ausgedrückt über die Lösungsviskosität (ηrel), gemessen nach DIN EN ISO 307, in 0,5 Gew.-%-iger m-Kresollösung, Temperatur 20 °C, Granulat, zwischen 1.1 und 1.3, bevorzugt zwischen 1.1 und 1.2, insbesondere bevorzugt zwischen 1.12 und 1.17), oder im Sinne von Nachkondensaten bzw. Polykondensaten (vorzugsweise mit einer zahlenmittleren Molmasse von wenigstens 5000 g/mol, insbesondere im Bereich von 5000 bis 30000 g/mol und/oder ausgedrückt über die Lösungsviskosität (ηrel), gemessen nach DIN EN ISO 307, in 0,5 Gew.-%-iger m-Kresollösung, Temperatur 20 °C, Granulat, zwischen 1.4 und 2.5, insbesondere bevorzugt zwischen 1.50 und 1.80) zum Polyamid (A) umgesetzt werden. So kann beispielsweise das Polyamid (A) durch Reaktion zwischen einem ersten Block, aufgebaut aus den Komponenten (a1) und (a2), und einem weiteren Block aus der Komponente (a3) sowie gegebenenfalls der Komponente (a4), oder einer Mischung aus einem Block aus der Komponente (a3) und einem Block aus der Komponente (a4) hergestellt werden, und es können anschliessend und/oder im Rahmen der genannten Umsetzung der Blöcke und/oder bereits bei der Bereitstellung der Blöcke die weiteren Bestandteile (B)-(E) hinzugefügt werden.

Für die oben genannten Anforderungen insbesondere für die Verwendung im Automobilbereich im Kontakt mit einer Kühlflüssigkeit ist eine spezifische Kombination von Eigenschaften erforderlich, namentlich insbesondere ein Schmelzpunkt in einem bestimmten Bereich, eine Bruchdehnung bei 130 °C oberhalb eines bestimmten Werts, eine Bruchdehnung bei Lagerung über 1000 Stunden bei 130 °C in einem Glykol-Wasser-Gemisch oberhalb eines bestimmten Werts, sowie eine Wasseraufnahme unterhalb eines bestimmten Werts. Nur wenn diese spezifische Kombination von Eigenschaften effektiv erreicht wird, sind die Polyamidformmassen überhaupt geeignet, für diese hochspezialisierte Anwendung infrage zu kommen.

Die in der Folge angegebenen Eigenschaften der Polyamidformmasse sind auf jeden Fall einzeln für sich betrachtet bevorzugt, bevorzugt aber vor allem in Kombination:
- gemäss einer bevorzugten Ausführungsform verfügt die Komponente (A) und/oder die Polyamidformmasse als Ganzes über einen Schmelzpunkt, bestimmt nach ISO-Norm 11357-3 am Granulat unter Verwendung von Differential Scanning Calorimetry (DSC) mit einer Aufheizrate von 20 °C/min, im Bereich von 295-315°C, vorzugsweise im Bereich von 300-315°C;
- gemäss einer bevorzugten Ausführungsform verfügt die Komponente (A) und/oder die Polyamidformmasse als Ganzes über eine Glasübergangstemperatur, bestimmt nach ISO-Norm 11357-2 am Granulat unter Verwendung von Differential Scanning Calorimetry (DSC) mit einer Aufheizrate von 20 °C/min, von wenigstens 100 °C und/oder von weniger als 130 °C, bevorzugt im Bereich von 105 bis 127°C, insbesondere im Bereich von 110 bis 125°C, vorzugsweise im Bereich von 120-125 °C;
- gemäss einer bevorzugten Ausführungsform verfügt die Komponente (A) und/oder die Polyamidformmasse als Ganzes über eine Wasseraufnahme, nach einer Lagerung bei 95 °C in Wasser über eine Dauer von 336 Stunden, von höchstens 3.5 %, vorzugsweise von höchstens 3.4 %, insbesondere vorzugsweise von höchstens 3.35%;
- gemäss einer bevorzugten Ausführungsform verfügt die Komponente (A) und/oder die Polyamidformmasse als Ganzes über eine Bruchdehnung, gemessen gemäss ISO 527 mit einer Zuggeschwindigkeit von 5 mm/min, bei einer Temperatur im Bereich von 120-140 °C, vorzugsweise bei einer Temperatur von 130 °C, von wenigstens 6.0 %, vorzugsweise im Bereich von 6.0-10 %;
- gemäss einer bevorzugten Ausführungsform verfügt die Komponente (A) und/oder die Polyamidformmasse als Ganzes über eine Bruchdehnung, gemessen gemäss ISO 527 mit einer Zuggeschwindigkeit von 5 mm/min, nach Lagerung bei einer Temperatur von 130 °C während 1008 Stunden gemäss GM-Norm GMW15468 (2011) in einem Glykol-Wasser-Gemisch (1:1), von wenigstens 2.0 %, vorzugsweise von wenigstens 2.3 %, insbesondere vorzugsweise im Bereich von 2.3-4 %;
- gemäss einer bevorzugten Ausführungsform verfügt die Komponente (A) und/oder die Polyamidformmasse als Ganzes über eine Lösungsviskosität (ηrel), gemessen nach DIN EN ISO 307, in 0,5 Gew.-%-iger m-Kresollösung, Temperatur 20 °C, Granulat, zwischen 1.4 und 2.0, insbesondere bevorzugt zwischen 1.50 und 1.80;
- gemäss einer bevorzugten Ausführungsform verfügt die Komponente (A) und/oder die Polyamidformmasse als Ganzes über eine Schmelzenthalpie, bestimmt nach ISO-Norm 11357-3 am Granulat unter Verwendung von Differential Scanning Calorimetry (DSC) mit einer Aufheizrate von 20 °C/min, im Bereich von 20-55 J/g, insbesondere im Bereich von 25-45 J/g. Bevorzugte Ausführungsformen von Komponente (A) haben eine Schmelzenthalpie im Bereich von 35 bis 55 J/g, insbesondere von 38 bis 48 J/g.

Hinsichtlich der Eigenschaften der späteren Verarbeitung und/oder Nutzung erweisen sich diese genannten Eigenschaften, einzeln oder in Kombination, als vorteilhaft.

Weiterhin überwiegen beim Copolyamid (A) bevorzugt die Aminoendgruppen die Carboxylendgruppen, wobei die Konzentration der Aminoendgruppen bevorzugt um wenigstens 10 mmol/kg, besonders bevorzugt um wenigstens 20 mmol/kg grösser ist als die Konzentration der Carboxylendgruppen.

Die Polyamidformmasse enthält zwingend in Form von **Komponente (B)** einen faserförmigen Verstärkungsstoff in einem Anteil von wenigstens 30 Gewichtsprozent und vorzugsweise höchstens 60 Gewichtsprozent.

Gemäss einer bevorzugten Ausführungsform ist die Polyamidformmasse dadurch gekennzeichnet, dass die Komponente (B) in einem Anteil, bezogen auf die Summe der Komponenten (A)-(E), im Bereich von 33-55 Gew.-%, vorzugsweise im Bereich von 35-45 Gew.-%, vorliegt.

Die Komponente (B) kann dabei bevorzugtermassen aus Glasfasern aufgebaut sein oder Glasfasern als Bestandteil enthalten. Die Glasfasern können dabei einen kreisförmigen Querschnitt, insbesondere vorzugsweise mit einem Durchmesser im Bereich von 5-20 µm oder im Bereich von 5-13 µm oder 6-10 µm, aufweisen, oder einen nicht-kreisförmigen Querschnitt, wobei das Abmessungsverhältnis von der Hauptquerschnittsachse zur senkrecht darauf stehenden neben Querschnittsachse bevorzugtermassen grösser als 2.5 ist, insbesondere bevorzugt im Bereich von 2.5-6 oder 3-5.

Gemäss einer bevorzugten Ausführungsform werden die faserförmigen Verstärkungsstoffe der Komponente (B) also in Form von Glasfasern eingesetzt.

Die Glasfasern können z.B. in Form von sogenannten Kurzfasern (z.B. Schnittglas mit einer Länge von 0.2-20 mm) oder Endlosfasern (Rovings) verwendet werden. Die Glasfasern (B) können unterschiedliche Querschnittsflächen aufweisen, wobei Glasfasern mit kreisförmigem Querschnitt (runde Fasern) und mit nicht-kreisförmigem Querschnitt (flache Fasern) bevorzugt sind.

Glasfasern mit kreisförmigem Querschnitt, also runde Glasfasern, haben bevorzugtermassen einen Durchmesser im Bereich von 5-20 µm, bevorzugt im Bereich von 5-13 µm und besonders bevorzugt im Bereich von 6-10 µm. Sie werden bevorzugt als Kurzglasfaser (Schnittglas mit einer Länge von 0.2 bis 20 mm, bevorzugt 2-12 mm) eingesetzt.

Bei den flachen Glasfasern, also Glasfasern mit nicht-kreisförmiger Querschnittsfläche, werden bevorzugtermassen solche mit einem Abmessungsverhältnis von der Hauptquerschnittsachse zur senkrecht darauf stehenden Nebenquerschnittsachse von mehr als 2.5, bevorzugt im Bereich von 2.5 bis 6, insbesondere im Bereich von 3 bis 5 eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres bevorzugtes kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Vorzugsweise ist die Komponente (B) ausgewählt aus der Gruppe bestehend aus: E-Glasfasern (diese bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm3, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO2, 17% Al2O3, 9% CaO, 5% MgO, 5% Na2O, 5% Eisenoxid sowie weiteren Metalloxiden), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Eine bevorzugte Ausführungsform der Komponente (B) sind hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid, wobei die Summe der Gehalte von Siliciumdioxid, Aluminiumoxid und Magnesiumoxid wenigstens 78 Gew.-%, bevorzugt wenigstens 87% und besonders bevorzugt wenigstens 92% bezogen auf die gesamte Glaszusammensetzung beträgt.

Konkret wird bevorzugt eine Zusammensetzung von 58-70 Gew.-% Siliciumdioxid (SiO2), 15-30 Gew.-% Aluminiumoxid (Al2O3), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO2), Boroxid (B2O3), Titandioxid (TiO2) oder Lithiumoxid (Li2O) eingesetzt. In einer weiteren Ausführungsform besitzt die hochfeste Glasfaser eine Zusammensetzung von 60-67 Gew.-% Siliciumdioxid (SiO2), 20-28 Gew.-% Aluminiumoxid (Al2O3), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO2), Boroxid (B2O3), Titandioxid (TiO2), Lithiumoxid (Li2O).

Insbesondere ist bevorzugt, wenn die hochfeste Glasfaser die nachfolgende Zusammensetzung aufweist: 62-66 Gew.-% Siliciumdioxid (SiO2), 22-27 Gew.-% Aluminiumoxid (Al2O3), 8-12 Gew.-% Magnesiumoxid (MgO), 0- 5Gew.-% Calciumoxid (CaO), 0-1 Gew.-% weitere Oxide, wie z.B. Zirkoniumdioxid (ZrO2), Boroxid (B2O3), Titandioxid (TiO2), Lithiumoxid (Li2O).

Die hochfeste Glasfaser besitzt eine Zugfestigkeit von grösser oder gleich 3700 MPa, vorzugsweise von wenigstens 3800 oder 4000 MPa, eine Reissdehnung von mindestens 4.8%, vorzugsweise von wenigstens 4.9 oder 5.0 %, und einen Zug-E-Modul von grösser 75 GPa, vorzugsweise von mehr als 78 oder 80 GPa, wobei diese Glaseigenschaften an Einzelfasern (pristine single filament) mit einem Durchmesser von 10 µm und eine Länge von 12.7 mm bei einer Temperatur von 23°C und einer relativen Luftfeuchte von 50% zu bestimmen sind. Konkrete Beispiele für diese hochfesten Glasfasern der Komponente (B1) sind S-Glasfasern von Owens Corning mit 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die z.B. als Roving eingesetzten Glasfasern (Endlosfasern) weisen bevorzugtermassen einen Durchmesser (bei runden Glasfasern) bzw. eine Nebenquerschnittsachse (bei flachen Glasfasern) von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen, d.h. ein Verhältnis von Haupt- zur Nebenquerschnittsachse von 2.5 bis 5. Die Endlosfasern können aus den oben beschriebenen Glassorten hergestellt sein, wobei Endlosfasern auf Basis von E-Glas und den hochfesten Glassorten bevorzugt sind. Diese Endlosfasern werden in die erfindungsgemässen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Bevorzugt werden als Komponente (B) Glasfasern aus E-Glas, mit nicht-kreisförmigem Querschnitt (flache Fasern) und mit einem Achsenverhältnis der Hauptquerschnittsachse zur Nebenquerschnittsachse von wenigstens 2.5, und/oder hochfeste Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid, wobei der Anteil an Magnesiumoxid (MgO) 5-15 Gew.-% und der Anteil an Calciumoxid 0 - 10 Gew.-% beträgt.

Die Glasfasern der Komponente (B) weisen bevorzugt als flache E-Glasfasern eine Dichte von 2.54 - 2.62 g/cm3, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Die erfindungsgemässen Glasfasern können mit einer für Thermoplaste, insbesondere für Polyamid geeigneten Schlichte, enthaltend einen Haftvermittler auf Basis einer Amino-oder Epoxysilanverbindung, versehen sein.

Die Polyamidformmasse enthält optional in Form von **Komponente (C)** auch partikuläre Füllstoffe, verschieden von den anderen Bestandteilen (B), (D) und (E), in einem Anteil von höchstens 30 Gewichtsprozent.

Gemäss einer bevorzugten Ausführungsform liegt die Komponente (C) in einem Anteil, bezogen auf die Summe der Komponenten (A)-(E), im Bereich von höchstens 20 Gew.-%, vorzugsweise im Bereich von höchstens 10 Gew.-%, insbesondere vorzugsweise im Bereich von 0.1-5 Gew.-% vor.

Die Komponente (C) kann, generell gesprochen, sphäroide und/oder ellipsoide Füllstoffe enthalten oder aus diesen aufgebaut sein, wobei vorzugsweise Silikat-, Metall-, Kunststoff-, Metalloxid-, Glas-, Mineralstoff-, Farbstoff-, Pigmentpartikel sowie Mischungen solcher Partikel eingesetzt werden können, wobei die Füllstoffe der Komponente (C) insbesondere bevorzugtermassen Füllstoffe sind, in oberflächenbehandelter oder unbehandelter Form, ausgewählt aus der Gruppe bestehend aus: Talk, Glimmer, Silikat, wie insbesondere Eisenaluminiumsilikat- und/oder Natriumaluminiumsilikat-Partikel, Quarz, Quarzmehl, Titandioxid, Wollastonit, Kaolin, Kieselsäuren, insbesondere amorphe Kieselsäuren, gemahlenes oder gefälltes Calciumcarbonat, Magnesiumcarbonat, Magnesiumhydroxid, Kreide, Kalk, Feldspat, Glimmer, Bariumsulfat, Bariumtitanat, Zinksulfid, Glaskugeln, insbesondere Voll- oder Hohl-Glaskugeln, gemahlenes Glas, insbesondere gemahlene Glasfasern, Glasschuppen, Glasflocken, dauerhaft magnetische bzw. magnetisierbare Metallverbindungen und/oder Legierungen, anorganische Pigmente, wie insbesondere Eisenoxid, Eisenmanganoxid, Metallpulver, insbesondere Eisenpulver, Kupferpulver, Aluminiumpulver, Metallflocken, insbesondere Aluminiumflocken, Eisenflocken, metallbeschichtete Füllstoffe, Metalloxide, insbesondere Spinelle, wie insbesondere Kupfereisenspinell, Kupferchromoxid, Kupferchromit (CuCr2O4), Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metalle oder Legierungen bzw. Keramiken, hohlkugelige Silikatfüllstoffe, Aluminiumoxid, Bornitrid, Borcarbid, Aluminiumnitrid, Calciumfluorid, sowie Mischungen der Elemente aus dieser Gruppe.

Gemäss dieser weiteren bevorzugten Ausführungsform kann die Formmasse also als Komponente (C) weitere Füllstoffe enthalten, in einem Anteil im Bereich von höchstens 20 Gew.-%, vorzugsweise im Bereich von höchstens 10 Gew.-%, insbesondere vorzugsweise im Bereich von 0.1-5 Gew.-% in der Polyamidformmasse, wobei die erfindungsgemässen thermoplastischen Formmassen auch einen teilchenförmigen Füllstoff oder eine Mischung aus zwei oder mehr unterschiedlichen teilchenförmigen Füllstoffen in Kombination mit Verstärkungsstoffen enthalten können.

Die Polyamidformmasse enthält optional in Form von **Komponente (D)** auch Hitzestabilisatoren, verschieden von den anderen Bestandteilen (B), (C) und (E), in einem Anteil von höchstens 2 Gewichtsprozent. Bevorzugtermassen liegt die Komponente (D) in einem Anteil, bezogen auf die Summe der Komponenten (A)-(E), im Bereich 0.1-2.0 Gew.-%, insbesondere bevorzugt im Bereich von 0.2-1.5 Gew.-%, vor.

Die Komponente (D) kann dabei gemäss einer bevorzugten Ausführungsform ausgewählt sein aus der folgenden Gruppe:
- Verbindungen des ein- oder zweiwertigen Kupfers, insbesondere Salze des ein-oder zweiwertigen Kupfers mit anorganischen oder organischen Säuren oder ein-oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, wobei besonders bevorzugt die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat sind, oder Mischungen dieser Verbindungen, wobei diese Kupfer-Verbindungen als solche oder bevorzugtermassen in Form von Konzentraten eingesetzt werden. Dabei ist unter Konzentrat ein Polymer, vorzugsweise gleicher oder im wesentlichen gleicher chemischer Natur wie Komponente (A), zu verstehen, welches das Kupfersalz in hoher Konzentration enthält. Insbesondere werden bevorzugtermassen die Kupferverbindungen in Kombination mit weiteren Metallhalogeniden, einschliesslich Alkalihalogeniden, wie Nal, KI, NaBr, KBr, eingesetzt, wobei das molare Verhältnis von Metallhalogenid zu Kupfer 0,5 bis 20, bevorzugt 1 bis 10 und besonders bevorzugt 2 bis 5 beträgt;
- Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen;
- Stabilisatoren auf Basis sterisch gehinderter Phenole, wobei diese Stabilisatoren vorzugsweise in einer Menge von 0,1 bis 1,5, bevorzugt von 0,2 bis 1 Gew.-% vorliegen;
- Phosphiten und Phosphoniten, sowie
- Mischungen der vorstehend genannten Stabilisatoren.

Es handelt sich also bevorzugtermassen um Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat.

Die Kupferverbindung kann als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupfer 0,5 bis 20, bevorzugt 1 bis 10 und besonders bevorzugt 2 bis 5 beträgt. Bevorzugt wird eine Kombination aus CuI und KI mit einer Gesamtkonzentration bezogen auf die Formmasse von 0.1 bis 0.5 Gew.-%, insbesondere von 0.2 bis 0.4 Gew.-% eingesetzt.

Ebenfalls möglich sind Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen.

Weiterhin möglich sind Stabilisatoren auf Basis sterisch gehinderter Phenole, wobei diese Stabilisatoren vorzugsweise in einer Menge von 0,1 bis 1,5, bevorzugt von 0,2 bis 1 Gew.-% vorliegen. Auch möglich sind Phosphite und Phosphonite.

Gleichermassen möglich sind Mischungen der vorstehend genannten Hitzestabilisatoren. Besonders bevorzugte Beispiele für erfindungsgemäss einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendia¬min, N-Phenyl-N'-cyclohexyl-p-phenylendiamin oder Mischungen von zwei oder mehreren davon.

Bevorzugte Beispiele für erfindungsgemäss einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von Irgatec NC 66 (erhältlich von BASF) und einer Kupferstabilisierung auf Basis von CuI und KI. Insbesondere bevorzugt wird eine Wärmestabilisierung ausschliesslich auf Basis von CuI und KI.

Neben dem Einsatz von organischen Hitzestabilisatoren und/oder von Kupfer oder Kupferverbindungen wird die Verwendung weiterer Übergangsmetalle oder weiterer Übergangsmetallverbindungen der Gruppe VB, VIB, VIIB und/oder VIIIB des Periodensystems bevorzugt ausgeschlossen.

Gemäss einer weiteren bevorzugten Ausführungsform sind die Hitzestabilisatoren der Komponente (D) ausgewählt aus der Gruppe der Phenol-basierten Hitzestabilisatoren, Phosphit-basierten Hitzestabilisatoren, Amin-basierten Hitzestabilisatoren, oder Mischungen oder Kombinationen davon, wobei insbesondere bevorzugt Komponente (D) ausgewählt ist aus der folgenden Gruppe: Triethylenglykol bis(3-tert-butyl-4-hydroxy-5-methylphenyl)propionat, Pentaerythritol Tetrakis(3-(3,5-di-tert-butyl-4-hydroxyphenyl)propionat), N,N'-Hexamethylen bis[3-(3,5-di-t-butyl-4 - hydroxyphenyl)propionamid], Tris (2,4-di-tert-butylphenyl) phosphit, Tris (2,4-di-tert-butylphenyl)phosphit, oder Mischungen davon.

Bevorzugte organische Stabilisatoren sind Phenol- und/oder Phosphit-Verbindungen, wie z.B. Irganox 245, Irganox 1010, Irganox 1098, Hostanox PAR 24 oder Irgafos 168. Besonders bevorzugt wird Irganox 1010 in einer Konzentration von gleich oder kleiner 0.5 Gew.-%.

Die Polyamidformmasse enthält optional in Form von **Komponente (E)** auch weitere Hilfsstoffe und/oder Additive, verschieden von den anderen Bestandteilen (A)-(D), in einem Anteil von höchstens 4 Gewichtsprozent.

Gemäss einer bevorzugten Ausführungsform liegt die Komponente (E) in einem Anteil, bezogen auf die Summe der Komponenten (A)-(E), im Bereich 0.1-4 Gew.-%, insbesondere bevorzugt im Bereich von 0.2-3 Gew.-%, vor.

Bevorzugtermassen ist die Komponente (E) ausgewählt aus der folgenden Gruppe: aliphatische Polyamide, Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Russ, Graphit, Kohlenstoffnanoröhrchen, Residuen aus Polymerisationsverfahren wie Katalysatoren, Salze und deren Derivate. Bevorzugtermassen ist die Komponente (E) frei von teilkristallinen, teilaromatischen Polyamiden.

Wie bereits weiter oben erläutert, ist die vorgeschlagene Polyamidformmasse insbesondere dadurch gekennzeichnet, dass sie sich, wenn zu einem Formkörper verarbeitet, bevorzugt durch Spritzguss, Extrusion oder Blasformen, für Anwendungen im Automobilbereich, insbesondere für die Lagerung oder Förderung von Kühlmittel, insbesondere von Kühlmitteln im Automobilbereich bei erhöhter Temperatur, bevorzugt bei Temperaturen von 130°C und höher, eignet.

Entsprechend betrifft die vorliegende Erfindung auch **Formkörper**, vorzugsweise hergestellt durch Spritzguss, Extrusion oder Blasformen, aus einer Polyamidformmasse, wie sie oben beschrieben wurde, oder aufweisend wenigstens einen Bereich oder eine Beschichtung aus einer Polyamidformmasse, wie sie oben beschrieben wurde. Dabei handelt es sich vorzugsweise um Formkörper im Kühlmittelkreislauf von Automobilen, insbesondere um Kühlmittelverteiler, Wasseraus- und -einlässe, Thermostate, Kühler, Kühlwasserkästen, Pumpen, Ventile und Konnektoren im Kühlmittelkreislauf.

Weiterhin betrifft die vorliegende Erfindung ein Verfahren zur Herstellung eines derartigen Formkörpers, vorzugsweise dadurch gekennzeichnet, dass eine Formmasse, wie sie weiter oben charakterisiert wurde, in aufgeschmolzener Form vorgelegt wird und das Formteil bevorzugtermassen in einem Extrusionsverfahren, einem Spritzgussverfahren oder einem Blasformverfahren aus dieser Formmasse gebildet wird.

Die erfindungsgemässen thermoplastischen Formmassen respektive daraus hergestellte Formkörper zeichnen sich durch eine gute Wärmealterungsstabilität, eine sehr gute Hydrolysebeständigkeit, insbesondere gegenüber Kühlflüssigkeiten, Dimensionsstabilität und eine gute Verarbeitungsbarkeit aus.

Diese Formmassen eignen sich daher zur Herstellung von Formkörpern jeglicher Art durch Spritzguss, Extrusion oder Blasformen, insbesondere durch Spritzguss für Anwendungen im Sanitärbereich, also mit Kontakt zu kaltem oder warmen Wasser, wie z.B. Wasserzähler, Wasserzählergehäuse und Wasserzählerkomponenten (Lager, Propeller, Pilone), Sanitärbauteile, Rohre, Leitungen, Rohrverbinder, Fittinge, z.B. für die Trinkwasseranwendung, Ventile, Armaturen, Haushaltsgeräte, Heisswasserbereiter, Reiskocher, Dampfgarer, Dampfbügeleisen, Teile für Tee- und Kaffeemaschinen. Ebenso sind die Formmassen geeignet zur Herstellung von Formkörpern im Kontakt mit Warmwasser in der Wasserversorgung, wie z.B. Warmwasserspeicher, und in Heiz- und Kühlsystemen. Bei den Heizsystemen seien insbesondere Öl-, Gas-, Holz- und Solarheizungen sowie Wärmepumpen und Raumheizungen genannt.

Weitere mögliche Anwendungen im Automobilbereich sind Zylinderkopfhauben, Motorabdeckungen, Gehäusen für Ladeluftkühler, Ladeluftkühlerklappen, Ansaugrohren, Ansaugkrümmern, Konnektoren, insbesondere für Benzin-, Diesel-, Harnstoff- und Druckluftleitungen, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen, Gehäuse und Funktionsteile für Pumpen, Getriebe, Ventile, Drosselklappen, Scheinwerfergehäuse, Reflektoren, Kurvenlichtverstellung, Zahnräder, Steckverbindungen, Konnektoren, Profile, Folien oder Schichten von Mehrschichtfolien, elektronische Bauteile, Gehäuse für elektronische Bauteile, Werkzeuge, Verbundwerkstoffe, Kunststoff-Kautschuk-Verbunde, Stutzen sowie Fittings zum Verbinden von Schläuchen oder Rohren.

Weiterhin können aus der erfindungsgemässen Formmasse ein- oder mehrschichtige Hohlkörper hergestellt werden, wie z.B. Rohre oder Behälter. Darunter fallen beispielsweise Ladeluftrohre für ein Automobil, fluidführende Mono- oder Mehrschichtleitungen, die glatt oder gewellt sein können, etwa Kraftstoffleitungen, Hydraulikleitungen, Bremsleitungen, Kupplungsleitungen oder Kühlflüssigkeitsleitungen, Bremsflüssigkeitsbehälter oder Kraftstoffbehälter, vorzugsweise hergestellt durch Spritzguss, Extrusion oder Blasformen.

Insbesondere beinhalten die Formkörper fluidführende Teile oder Leitungen (Gase und/oder Flüssigkeiten) oder Teile, die beim bestimmungsgemässen Gebrauch mit Fluiden in Berührung kommen, wobei das Fluid insbesondere Wasser, Glykol, Öl, Kraftstoffe (Benzin, Diesel), Alkohole (z.B. Methanol, Ethanol, Isopropanol), oder Mischungen davon, ist. Bei den Formteilen handelt es sich bevorzugt um Leitungen, Stutzen, Konnektoren oder Fittings und Behältern, die auch antistatisch ausgerüstet sein können, für den Automobilbereich. Konkret seien glatte und gewellte Rohre genannt, Rohrabschnitte, Stutzen (Ansaug-, Entlüftungs-, Einfüll-, Ablass-), Fittings zum Verbinden von Schläuchen, Wellrohren und medienführenden Leitungen, Bestandteil von Mehrschichtleitungen (Aussen-, Zwischen-, Innenschicht), Behälter, Teile von Behältern (z.B. Verschlüsse), einzelne Schichten von Mehrschichtbehältern, Abdeckungen oder Kurbelgehäuseteile, wie z.B. Entlüftungen für Kurbelwellengehäuse, im Automobilbereich, Hydraulikleitungen, Bremsleitungen, Bremsflüssigkeitsbehälter, Kühlflüssigkeitsleitungen.

Insbesondere bevorzugt sind mit Wasser und/oder Glykol in Kontakt stehende Kühlmittelverteiler, Kühlflüssigkeitsleitungen, Rohrabschnitte, Stutzen, Ein- und Auslässe, Konnektoren, Verteiler, Fittinge, Gehäuse, Mischer, Hahn, Filtergehäuse, Pumpen, Wasserpumpengehäuse, Bauteile für Wasserpumpen, Thermostatgehäuse, Propeller für Wasserpumpen, Ventile, Ventilkomponenten (Gehäuse, Absperrkugel, Schieber, Zylinder), Verteiler, Kühler, Kühlwasserkästen, Kühlmittelvorratsgehäuse, im Automobilbereich.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Beschreibung der Herstellung:

Die Herstellung der Polyamid-Formmassen nach den Ausführungsbeispielen erfolgt nach dem in EP 1 988 113 A1 beschriebenen Verfahren. Dabei wird insbesondere verwiesen auf das Verfahren, wie es in der EP-A 1 988 113 in Abs. [0038] sowie [0113]-[0120] beschrieben wird, hinsichtlich Herstellungsverfahren werden diese Textabschnitte ausdrücklich in den Offenbarungsgehalt dieser Anmeldung mit eingeschlossen. Monomere, Katalysator und Regler werden in die Anlage gegeben und ein Vorkondensat hergestellt. Das getrocknete Vorkondensat wird im Extruder nachkondensiert. Das Nachkondensat wird dann mit Glasfasern und Additiven gemischt und granuliert. Aus den Granulaten werden Prüfkörper hergestellt und die Eigenschaften geprüft, wie dies in der Folge weiter detailliert dargestellt wird.

### Verwendete Materialien:

| | |
|---|---|
| PA-3: | Teilkristallines, teilaromatisches Polyamid PA 6T/6I aus 1,6-Hexandiamin, Terephthalsäure (70 mol-%) und Isophthalsäure (30 mol-%) mit einem Schmelzpunkt von 325°C und einer relativen Viskosität von ηᵣₑₗ = 1.58; |
| Antischaum: | DOW CORNING® RD Antifoam Emulsion 10% silicone emulsion |
| Irganox 1010: | Pentaerythritoltetrakis-[3-(3,5-di-tert-butyl-4-hydroxyphenyl)-propionate, Antioxidans auf Basis eines sterisch gehinderten Phenols, erhältlich von Ciba Specialty Chemicals, Inc. |
| MB BLACK: | Russ-Masterbatch aus 75% Polyamid PA66 und 25% Russ (PB4750) |
| Glasfasern : | CPIC ECT301HP: E-Glas Durchmesser 10 µm (Querschnittsfläche rund), Länge 4.5 mm, erhältlich von CHONGQING POLYCOMP INTERNATIONAL CORP., China |

### Herstellung der Prüfkörper:

Die Prüfkörper wurden auf einer Arburg Allrounder Spritzgussmaschine hergestellt, wobei die Zylindertemperaturen von 250°C bis 350°C und eine Schneckenumfangsgeschwindigkeit von 15 m/min eingestellt wurden. Die Formtemperatur betrug 130°C.

### Messverfahren:

Die Messungen wurden nach folgenden Normen und an folgenden Prüfkörpern, und falls in den folgenden Tabellen nicht anders vermerkt, in trockenem Zustand, durchgeführt.
Zug-E-Modul: ISO 527 mit einer Zuggeschwindigkeit von 1 mm/min, ISO-Zugstab, Norm: ISO/CD 3167, Typ A1, 170 x 20/10 x 4 mm, Temperatur 23 °C oder 130 °C.
Bruchfestigkeit und Bruchdehnung: ISO 527 mit einer Zuggeschwindigkeit von 5 mm/min. ISO-Zugstab, Norm: ISO/CD 3167, Typ A1, 170 x 20/10 x 4 mm, Temperatur 23°C oder 130 °C.
Relative Viskosität: DIN EN ISO 307, in 0,5 Gew.-%-iger m-Kresollösung, Temperatur 20 °C.
Wasseraufnahme: ISO-Zugstäbe werden bei einer Temperatur von 95°C für die Dauer von 336 Stunden in Wasser gelagert. Nach Abtrocknen der Oberfläche mit einem Baumwolltuch wird die prozentuale Gewichtszunahme in Bezug auf das Ausgangsgewicht (trockner ISO-Zugstab) bestimmt.
Hydrolysestabilität gegenüber Kühlmittel: Die Hydrolysestabilität wird gemäss GM-Norm GMW15468 (2011) bestimmt. Hierzu werden Testkörper (ISO-Zugstab), trocken wie im Spritzguss anfallend, in einem Glykol-Wasser-Gemisch (1:1) 504 bzw. 1008 Stunden bei 130°C in einem Druckbehälter gelagert. Beim Glykol handelt es sich um den VW Kühlmittelzusatz G13 gemäss Norm VW TL 774 J. Nachdem die Lagerung beendet ist, werden die Testkörper im Kühlmittel auf 23°C abgekühlt, nach dem Entnehmen aus dem Kühlmittel mit Wasser abgespült, mit einem Baumwolltuch abgerieben und im Exsikkator über Silikagel gelagert. Innerhalb von 7 Tagen nach der Probenentnahme wird der zuvor beschriebene Zugversuch nach ISO 527 an den gelagerten Testkörpern durchgeführt.
Thermisches Verhalten (Schmelzpunkt, Schmelzenthalpie und Glasumwandlungstemperatur (Tg): ISO-Norm 11357-1, -2 und -3, Granulat, die Differential Scanning Calorimetry (DSC) wird mit Aufheizrate von 20 °C/min durchgeführt.
Schlagzähigkeit und Kerbschlagzähigkeit nach Charpy wurden nach ISO 179/keU am ISO-Prüfstab, Norm: ISO/CD 3167, Typ B1, 80 x 10 x 4mm bei einer Temperatur von 23°C gemessen.
Die Wärmeformbeständigkeit HDT A (1,8 MPa) wurde gemäss DIN EN ISO 75-1,-2, am ISO-Schlagstab mit der Dimension 80x10x4 mm in Flachkantposition durchgeführt.

### Resultate:

In den folgenden Tabellen sind die Resultate zusammengefasst, wobei in Tab. 2 die erfindungsgemässen Beispiele zusammengestellt sind und in Tab. 3 die Vergleichsbeispiele. Tabelle 1 zeigt den Reaktionsansatz der in den Beispielen und Vergleichsbeispielen verwendeten Copolyamide.

**Tabelle 1: Copolyamide PA-1 bis PA-7**

| **CoPA** | | **PA-1** | **PA-2** | **PA-4** | **PA-5** | **PA-6** | **PA-7** |
|---|---|---|---|---|---|---|---|
| Zusammensetzung CoPA 6T/6I/66/612 | | 63/27/0/ 10 | 65/25.5/4.5/ 5 | 65/25/10/ 0 | 66.5/28.5/5/ 0 | 63/27/10/ 0 | 66.2/22.5/11.3 /0 |
| 1,6-Hexandiamin | kg | 31.1149 | 31.4991 | 31.9138 | 31.7946 | 31.9138 | 31.9457 |
| Terephthalsäure | kg | 27.0095 | 27.7821 | 27.7457 | 28.4015 | 28.5931 | 28.2442 |
| Isophthalsäure | kg | 11.5632 | 10.8991 | 10.6619 | 12.1721 | 9.8143 | 9.5844 |
| Adipinsäure | kg | | 1.8420 | 4.0754 | 2.0287 | 40.757 | 4.6226 |
| Dodecandisäure | kg | 4.7029 | 2.3682 | | | | |
| NaH₂PO₂*H₂O | kg | | | 0.0257 | 0.0257 | 0.0257 | 0.0257 |
| H₃PO₂ (50% in Wasser) | kg | 0.0319 | 0.0319 | | | | |
| Benzoesäure | kg | 0.5475 | 0.5475 | 0.5475 | 0.5475 | 0.5475 | 0.5475 |
| Antischaum | kg | 0.0300 | 0.0300 | 0.0300 | 0.0300 | 0.0300 | 0.0300 |
| Wasser | kg | 25.0000 | 25.0000 | 25.0000 | 25.0000 | 25.0000 | 25.0000 |

Die für die Vergleichsversuche verwendeten Systeme des generellen Typs PA 6T/6I/66 entsprechen im wesentlichen Polyamid-Typen, wie sie aus der USRE34447 aus einem anderen technischen Zusammenhang bekannt sind.

**Tabelle 2: Zusammensetzung und Eigenschaften der erfindungsgemässen Beispiele B1 bis B5.**

| **Komponenten** | **Einheit** | **B1** | **B2** | **B3** | **B4** | **B5** |
|---|---|---|---|---|---|---|
| PA-1 | Gew.-% | 65.3 | 63.3 | 61.3 | 53.3 | |
| PA-2 | Gew.-% | | | | | 61.3 |
| MB BLACK | Gew.-% | 1.2 | 1.2 | 1.2 | 1.2 | 1.2 |
| Glasfaser | Gew.-% | 33 | 35 | 37 | 45 | 37 |
| Irganox 1010 | Gew.-% | 0.5 | 0.5 | 0.5 | 0.5 | 0.5 |
| Zusammensetzung CoPA | Gew.-% | 63/27/0/10 | 63/27/0/10 | 63/27/0/10 | 63/27/0/10 | 65/25.5/4.5/5 |
| 6T/6I/66/612 | | | | | | |

| *Eigenschaften* | | | | | | |
|---|---|---|---|---|---|---|
| Relative Viskosität | | 1.692 | 1.674 | 1.691 | 1.632 | 1.722 |
| Schmelzpunkt | °C | 314 | 308 | 309 | 307 | 312 |
| Schmelzenthalpie¹⁾ | J/g | 30 | 29 | 28 | 25 | 25 |
| Tg | °C | 122 | 121 | 121 | 121 | 123 |
| Zug-E-Modul | | | | | | |
| 23°C | [MPa] | 13350 | 13800 | 14090 | 17050 | 14320 |
| 130°C | [MPa] | 5020 | 4750 | 5230 | 5840 | 5970 |
| Bruchfestigkeit | | | | | | |
| 23°C | [MPa] | 209 | 230 | 232 | 254 | 228 |
| 130°C | | 83 | 80 | 88 | 87 | 91 |
| Bruchdehnung | | | | | | |
| 23°C | [%] | 2.3 | 2.5 | 2.4 | 2.4 | 2.2 |
| 130°C | | 7.8 | 8.6 | 8.1 | 7.6 | 6.3 |
| Wasseraufnahme | [%] | 3.4 | 3.2 | 3.2 | 2.7 | 3.3 |
| Zug-E-Modul²⁾ | | | | | | |
| 504h / 130°C | [MPa] | 9260 | 9620 | 10140 | 12415 | 10240 |
| 1008h / 130°C | [MPa] | 9150 | 9880 | 10410 | 12790 | 10720 |
| Bruchfestigkeit²⁾ | | | | | | |
| 504h / 130°C | [MPa] | 134 | 136 | 144 | 153 | 139 |
| 1008h / 130°C | [MPa] | 121 | 133 | 137 | 148 | 129 |
| Bruchdehnung²⁾ | | | | | | |
| 504h / 130°C | [%] | 3.3 | 3.9 | 3.9 | 3.5 | 3.1 |
| 1008h / 130°C | [%] | 2.4 | 3.3 | 2.7 | 3.0 | 2.4 |
| HDT A (1.8 MPa) | °C | *n.b.* | 268 | *n.b.* | 275 | *n.b.* |

| | | | | | | |
|---|---|---|---|---|---|---|
| ¹⁾ Schmelzenthalpie von PA-1 und PA-2 sind 45 bzw. 40 J/g ²⁾ nach Lagerung in Glykol (Kühlmittelzusatz G13)/Wasser-Mischung (1:1) gemäss der angegebenen Zeit und Temperatur | | | | | | |

Die Beispiele B1-B5 erfüllen alle weiteren in der Norm GMW 16360 gestellten Anforderungen, so insbesondere auch die Kerbschlagzähigkeit nach Lagerung 1000h/170°C sowie die Bruchfestigkeit nach Lagerung 1000h/170°C (Kerbschlagzähigkeit gemäss ISO 179 bei 23°C resp. Bruchfestigkeit gemäss ISO527 bei 23°C nach 1000 Stunden Lagerung bei 170 °C gemäss ISO 188; Methode A: Umluftofen; in Bezug auf die entsprechenden Werte vor der Lagerung; nicht gealterte Proben).

**Tabelle 3: Zusammensetzung und Eigenschaften der Vergleichsbeispiele V1 bis V7.**

| **Komponenten** | **Einheit** | **V1** | **V2** | **V3** | **V4** | **V5** | **V6** | **V7** | **V8** |
|---|---|---|---|---|---|---|---|---|---|
| PA-3 | Gew.-% | | | | | | 65.3 | 58.3 | 48.3 |
| PA-4 | Gew.-% | 65.3 | | | | 61.3 | | | |
| PA-5 | Gew.-% | | 65.3 | | | | | | |
| PA-6 | Gew.-% | | | 65.3 | | | | | |
| PA-7 | Gew.-% | | | | 65.3 | | | | |
| MB BLACK | Gew.-% | 1.2 | 1.2 | 1.2 | 1.2 | 1.2 | 1.2 | 1.2 | 1.2 |
| Glasfaser | Gew.-% | 33 | 33 | 33 | 33 | 37 | 33 | 40 | 50 |
| Irganox 1010 | Gew.-% | 0.5 | 0.5 | 0.5 | 0.5 | 0.5 | 0.5 | 0.5 | 0.5 |
| Zusammensetzu ng CoPA 6T/6I/66/612 | Gew.-% | 65/25/ 10 /0 | 66.5/2 8.5/5/0 | 63/27/ 10 /0 | 66.2/2 2.5/11. 3/0 | 65/25/ 10/0 | 70/30/ 0/0 | 70/30/ 0/0 | 70/30/ 0/0 |

| ***Eigenschaften*** | | | | | | | | | |
|---|---|---|---|---|---|---|---|---|---|
| Relative Viskosität | | 1.668 | 1.676 | 1.676 | 1.742 | 1.710 | 1.666 | 1.688 | 1.691 |
| Schmelzpunkt | °C | 316 | 315 | 313 | 311 | 316 | 325 | 325 | 325 |
| Tg | °C | 126 | 126 | 121 | 123 | 126 | 130 | 130 | 130 |
| Zug-E-Modul | | | | | | | | | |
| 23°C | MPa | 13620 | 12520 | 13450 | 12780 | 15700 | 12550 | 15050 | 18980 |
| 130°C | MPa | 6040 | 5240 | 4580 | 4870 | 6200 | 8750 | 9350 | 11850 |
| Bruchfestigkeit | | | | | | | | | |
| 23°C | MPa | 215 | 208 | 205 | 200 | 228 | 225 | 246 | 283 |
| 130°C | MPa | 89 | 85 | 83 | 78 | 95 | 115 | 132 | 135 |
| Bruchdehnung | | | | | | | | | |
| 23°C | % | 2.1 | 2.3 | 2.2 | 2.3 | 2.2 | 2.5 | 2.3 | 2.3 |
| 130°C | % | 5.8 | 8.5 | 9.9 | 6.7 | 5.5 | 4.5 | 4.1 | 3.8 |
| Wasseraufnahme 336h H2O 95°C | % | 3.7 | 3.9 | 4.0 | 3.9 | 3.6 | 3.5 | 2.8 | 2.3 |
| Zug-E-Modul²⁾ | | | | | | | | | |
| 504h / 130°C | MPa | 9880 | 8270 | 7950 | 8250 | 10080 | 10040 | 12070 | 15310 |
| 1008h / 130°C | MPa | 9250 | 8520 | 7780 | 8380 | 9930 | 9770 | 12350 | 16030 |
| Bruchfestigkeit²⁾ | | | | | | | | | |
| 504h / 130°C | MPa | 132 | 121 | 116 | 99 | 132 | 153 | 169 | 185 |
| 1008h / 130°C | MPa | 103 | 106 | 93 | 93 | 121 | 128 | 138 | 154 |
| Bruchdehnung²⁾ | | | | | | | | | |
| 504h / 130°C | % | 2.9 | 4.2 | 4.2 | 3.1 | 3.2 | 3.0 | 2.6 | 2.5 |
| 1008h / 130°C | % | 1.8 | 2.2 | 2.2 | 2.0 | 2.4 | 2.1 | 1.7 | 1.5 |
| HDT A (1.8 MPa) | °C | 276 | *n.b.* | *n.b.* | *n.b.* | *n.b.* | 280 | 280 | 280 |

| | | | | | | | | | |
|---|---|---|---|---|---|---|---|---|---|
| *n.b.: nicht bestimmt* ²⁾ nach Lagerung in Glykol (Kühlmittelzusatz G13)/Wasser-Mischung (1:1) gemäss der angegebenen Zeit und Temperatur | | | | | | | | | |

### Diskussion der Resultate:

Die ausgeführten Beispiele zeigen, dass die Copolyamide des Standes der Technik die von der GMW16360 geforderte Beständigkeit in Glykol/Wasser bei 130°C (GM-Norm GMW15468 (2011)) nicht erfüllen. Die Vergleichsbeispiele V1 bis V5 ergeben eine ungenügende Bruchfestigkeit, während V7 und V8 nach der Lagerung eine zu geringe Bruchdehnung aufweisen. Weiterhin haben V1 bis V5 aufgrund der Wasseraufnahme eine ungenügende Dimensionsstabilität. Zudem zeigen einige Formmassen in den Vergleichsbeispielen Probleme bei der Entformung, d.h. die Formteile können nur unter Beschädigung aus dem Werkzeug (Werkzeugtemperatur ist 130°C) entformt werden. Dies spiegelt sich auch in der zu tiefen Bruchdehnung bei 130°C wider (V1, V5, V6 bis V8). Dagegen besitzen die Formmassen nach der Erfindung eine sehr gute Hydrolysebeständigkeit in Glykol/Wasser bei 130 °C und übertreffen dabei die Forderungen der GM-Norm GMW16360 für glasfaserverstärkte Polyphthalamide deutlich. Gleichzeitig sind diese Formmassen gut entformbar, haben eine Bruchdehnung von mehr als 6.0 % und sind aufgrund des moderaten Schmelzpunktes im Bereich von 307 bis 314°C und einer Glasübergangstemperatur (Tg) im Bereich von 121 bis 123°C problemlos verarbeitbar. Somit besitzen nur die Formmassen in den Beispielen B1 bis B5 die erforderliche Kombination aus guter Hydrolysebeständigkeit, guter Dimensionsstabilität, guter Entformbarkeit und guter Verarbeitbarkeit.

## Patentansprüche

1. Polyamidformmasse bestehend aus den folgenden Bestandteilen (A)-(E):
(A) 40 - 70 Gew.-% mindestens eines teilkristallinen, teilaromatischen Polyamids, aufgebaut aus:
(a1) 60 bis 75 Gew.-% 6T-Einheiten, gebildet aus 1,6-Hexandiamin und Terephthalsäure;
(a2) 20 bis 35 Gew.-% 6I-Einheiten, gebildet aus 1,6-Hexandiamin und Isophthalsäure;
(a3) 3 bis 15 Gew.-% 612-Einheiten, gebildet aus 1,6-Hexandiamin und Dodecandisäure;
(a4) 0 bis 5 Gew.-% einer der folgenden Einheiten: 66-Einheiten, gebildet aus 1,6-Hexandiamin und Adipinsäure; 68-Einheiten, gebildet aus 1,6-Hexandiamin und Korksäure; 69-Einheiten gebildet aus 1,6-Hexandiamin und Azelainsäure; 610-Einheiten gebildet aus 1,6-Hexandiamin und Sebacinsäure; 6-Einheiten gebildet aus ε-Caprolactam; oder einer Mischung derartiger Einheiten;
wobei die Summe der Komponenten (a1) bis (a4) 100 Gew.-% des Polyamids (A) ausmacht;
(B) 30 - 60 Gew.-% faserförmige Verstärkungsstoffe;
(C) 0 - 30 Gew.-% partikuläre Füllstoffe verschieden von (B), (D) und (E));
(D) 0-2.0 Gew.-% Hitzestabilisatoren;
(E) 0 - 6 Gew.-% Hilfsstoffe und/oder Additive, verschieden von (A)-(D);
wobei die Summe der Komponenten (A)-(E) 100 Gew.-% ausmacht.

2. Polyamidformmasse nach Anspruch 1, **dadurch gekennzeichnet, dass** die Summe der Komponenten (a3) und (a4), bezogen auf die 100 Gew.-% des Polyamids (A), im Bereich von 5-15 Gew.-% liegt, vorzugsweise im Bereich von 8-12 Gew.-%.

3. Polyamidformmasse nach einem der vorhergehenden Ansprüche, **dadurch gekennzeichnet, dass** das teilkristalline, teilaromatische Polyamid der Komponente (A) aufgebaut ist aus:
(a1) 60 bis 70 Gew.-%, vorzugsweise 62-68 Gew.-%, insbesondere vorzugsweise 63-66 Gew.-%, 6T-Einheiten, gebildet aus 1,6-Hexandiamin und Terephthalsäure;
(a2) 20 bis 30 Gew.-%, vorzugsweise 23-29 Gew.-%, insbesondere vorzugsweise 24-27 Gew.-%, 6I-Einheiten, gebildet aus 1,6-Hexandiamin und Isophthalsäure;
(a3) 4 bis 15 Gew.-%, vorzugsweise 5-13 Gew.-%, insbesondere vorzugsweise 7-13 oder 8-12 Gew.-%, 612-Einheiten, gebildet aus 1,6-Hexandiamin und Dodecandisäure;
(a4) 0 bis 5 Gew.-%, vorzugsweise 0-4 Gew.-% , insbesondere vorzugsweise 0.5-3 oder 1-3 Gew.-%, einer der folgenden Einheiten: 66-Einheiten, gebildet aus 1,6-Hexandiamin und Adipinsäure; 68-Einheiten, gebildet aus 1,6-Hexandiamin und Korksäure; 69-Einheiten gebildet aus 1,6-Hexandiamin und Azelainsäure; 610-Einheiten gebildet aus 1,6-Hexandiamin und Sebacinsäure; 6-Einheiten gebildet aus ε-Caprolactam; oder einer Mischung derartiger Einheiten, wobei insbesondere bevorzugt ist, dass es keine (a4) Einheiten gibt;
wobei die Summe der Komponenten (a1) bis (a4) 100 Gew.-% des Polyamids (A) ausmacht.

4. Polyamidformmasse nach einem der vorhergehenden Ansprüche, **dadurch gekennzeichnet, dass** der Bestandteil (a4) des teilkristallinen, teilaromatischen Polyamids der Komponente (A) eine der folgenden Einheiten ist: 66-Einheiten, gebildet aus 1,6-Hexandiamin und Adipinsäure; 6-Einheiten gebildet aus ε-Caprolactam; oder eine Mischung derartiger Einheiten, wobei vorzugsweise der Bestandteil (a4) ausschliesslich durch 66-Einheiten, gebildet aus 1,6-Hexandiamin und Adipinsäure, gegeben ist, vorzugsweise in einem Anteil im Bereich von 0-5 Gew.-%, vorzugsweise 0-4 Gew.-% , insbesondere vorzugsweise 0.5-3 Gew.-%.

5. Polyamidformmasse nach einem der vorhergehenden Ansprüche, **dadurch gekennzeichnet, dass** die Molmasse und/oder die Endgruppen eingestellt sind durch mindestens eine aliphatische, cycloaliphatische oder aromatische monofunktionelle Carbonsäure, vorzugsweise ausgewählt aus der folgenden Gruppe: Essigsäure, Propionsäure, Stearinsäure, 2-Ethylhexansäure, Cyclohexansäure und Benzoesäure oder Mischungen davon, wobei das Mol-Verhältnis der monofunktionellen Carbonsäure zu 1,6-Hexandiamin im Bereich von 0.5-5 Mol-%, vorzugsweise im Bereich von 1.0-2.5 Mol-%, insbesondere vorzugsweise im Bereich von 1.4-1.9 Mol-% liegt;
und/oder dass das Mol-Verhältnis von 1,6-Hexandiamin zur Summe der eingesetzten Dicarbonsäuren wenigstens 1.01, insbesondere wenigstens 1.03 ist, vorzugsweise höchstens 1.15, wobei insbesondere bevorzugt Bereiche für das Verhältnis Diamin zu Dicarbonsäuren wie folgt ausgewählt sind: 1.03 bis 1.10, insbesondere 1.04 bis 1.08.

6. Polyamidformmasse nach einem der vorhergehenden Ansprüche, **dadurch gekennzeichnet, dass** die Komponente (A) und/oder die Polyamidformmasse als Ganzes einen Schmelzpunkt, bestimmt nach ISO-Norm 11357-3 am Granulat unter Verwendung von Differential Scanning Calorimetry (DSC) mit einer Aufheizrate von 20 °C/min, im Bereich von 295-320°C, vorzugsweise im Bereich von 300-315°C aufweist;
und/oder dass die Komponente (A) und/oder die Polyamidformmasse als Ganzes eine Glasübergangstemperatur, bestimmt nach ISO-Norm 11357-2 am Granulat unter Verwendung von Differential Scanning Calorimetry (DSC) mit einer Aufheizrate von 20 °C/min, im Bereich von wenigstens 100°C und höchstens 130 °C, insbesondere im Bereich von 105-127 °C oder 110-125 °C, vorzugsweise im Bereich von 120-125 °C, aufweist;
und/oder dass die Komponente (A) und/oder die Polyamidformmasse als Ganzes eine Wasseraufnahme, nach einer Lagerung bei 95 °C in Wasser über eine Dauer von 336 Stunden, von höchstens 3.5 %, vorzugsweise von höchstens 3.4 %, insbesondere vorzugsweise von höchstens 3.35% aufweist;
und/oder dass die Komponente (A) und/oder die Polyamidformmasse als Ganzes eine Bruchdehnung, gemessen gemäss ISO 527 mit einer Zuggeschwindigkeit von 5 mm/min, bei einer Temperatur im Bereich von 120-140 °C, vorzugsweise bei einer Temperatur von 130 °C, von wenigstens 6.0 %, vorzugsweise von wenigstens 6.5 % oder wenigstens 7 %, insbesondere vorzugsweise im Bereich von 6-10 %, aufweist;
und/oder dass die Komponente (A) und/oder die Polyamidformmasse als Ganzes eine Bruchdehnung, gemessen gemäss ISO 527 mit einer Zuggeschwindigkeit von 5 mm/min, nach Lagerung bei einer Temperatur von 130 °C während 1008 Stunden gemäss GM-Norm GMW15468 (2011) in einem Glykol-Wasser-Gemisch (1:1), von wenigstens 2.0 %, vorzugsweise von wenigstens 2.3 %, insbesondere vorzugsweise im Bereich von 2.3-4 %, aufweist;
und/oder dass die Komponente (A) und/oder die Polyamidformmasse als Ganzes eine Lösungsviskosität (ηᵣₑₗ), gemessen nach DIN EN ISO 307, in 0,5 Gew.-%-iger m-Kresollösung, Temperatur 20 °C, Granulat, zwischen 1.4 und 2.0, insbesondere bevorzugt zwischen 1.50 und 1.80;
und/oder dass die Komponente (A) und/oder die Polyamidformmasse als Ganzes eine Schmelzenthalpie, bestimmt nach ISO-Norm 11357-3 am Granulat unter Verwendung von Differential Scanning Calorimetry (DSC) mit einer Aufheizrate von 20 °C/min, im Bereich von 20-55 J/g, insbesondere im Bereich von 25-45 J/g aufweist.

7. Polyamidformmasse nach einem der vorhergehenden Ansprüche, **dadurch gekennzeichnet, dass** die **Komponente (B)** in einem Anteil, bezogen auf die Summe der Komponenten (A)-(E), im Bereich von 33-55 Gew.-%, vorzugsweise im Bereich von 35-45 Gew.-%, vorliegt.

8. Polyamidformmasse nach einem der vorhergehenden Ansprüche, **dadurch gekennzeichnet, dass** die Komponente (B) aufgebaut ist aus Glasfasern oder Glasfasern enthält, wobei
die Glasfasern einen kreisförmigen Querschnitt, insbesondere vorzugsweise mit einem Durchmesser im Bereich von 5-20 µm oder im Bereich von 5-13 µm oder 6-10 µm, aufweisen,
oder einen nicht-kreisförmigen Querschnitt, wobei das Abmessungsverhältnis von der Hauptquerschnittsachse zur senkrecht darauf stehenden neben Querschnittsachse bevorzugtermassen grösser als 2.5 ist, insbesondere bevorzugt im Bereich von 2.5-6 oder 3-5.

9. Polyamidformmasse nach einem der vorhergehenden Ansprüche, **dadurch gekennzeichnet, dass** die **Komponente (C)** in einem Anteil, bezogen auf die Summe der Komponenten (A)-(E), im Bereich von höchstens 20 Gew.-%, vorzugsweise im Bereich von höchstens 10 Gew.-%, insbesondere vorzugsweise im Bereich von 0.1-5 Gew.-% vorliegt.

10. Polyamidformmasse nach einem der vorhergehenden Ansprüche, **dadurch gekennzeichnet, dass** die Komponente (C) sphäroide und/oder ellipsoide Füllstoffe enthält oder aus diesen aufgebaut ist, wobei vorzugsweise Silikat-, Metall-, Kunststoff-, Metalloxid-, Glas-, Mineralstoff-, Farbstoff-, Pigmentpartikel sowie Mischungen solcher Partikel eingesetzt sind, wobei die Füllstoffe der Komponente (C) insbesondere bevorzugtermassen als Füllstoffe, in oberflächenbehandelter oder unbehandelter Form, ausgewählt sind aus der Gruppe bestehend aus: Talk, Glimmer, Silikat, wie insbesondere Eisenaluminiumsilikat-und/oder Natriumaluminiumsilikat-Partikel, Quarz, Quarzmehl, Titandioxid, Wollastonit, Kaolin, Kieselsäuren, insbesondere amorphe Kieselsäuren, gemahlenes oder gefälltes Calciumcarbonat, Magnesiumcarbonat, Magnesiumhydroxid, Kreide, Kalk, Feldspat, Glimmer, Bariumsulfat, Bariumtitanat, Zinksulfid, Glaskugeln, insbesondere Voll- oder Hohl-Glaskugeln, gemahlenes Glas, insbesondere gemahlene Glasfasern, Glasschuppen, Glasflocken, dauerhaft magnetische bzw. magnetisierbare Metallverbindungen und/oder Legierungen, anorganische Pigmente, wie insbesondere Eisenoxid, Eisenmanganoxid, Metallpulver, insbesondere Eisenpulver, Kupferpulver, Aluminiumpulver, Metallflocken, insbesondere Aluminiumflocken, Eisenflocken, metallbeschichtete Füllstoffe, Metalloxide, insbesondere Spinelle, wie insbesondere Kupfereisenspinell, Kupferchromoxid, Kupferchromit (CuCr2O4), Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metalle oder Legierungen bzw. Keramiken, hohlkugelige Silikatfüllstoffe, Aluminiumoxid, Bornitrid, Borcarbid, Aluminiumnitrid, Calciumfluorid, sowie Mischungen der Elemente aus dieser Gruppe.

11. Polyamidformmasse nach einem der vorhergehenden Ansprüche, **dadurch gekennzeichnet, dass** die **Komponente (D)** in einem Anteil, bezogen auf die Summe der Komponenten (A)-(E), im Bereich 0.1-2.0 Gew.-%, insbesondere bevorzugt im Bereich von 0.2-1.5 Gew.-%, vorliegt,
oder dass die Komponente (D) ausgewählt ist aus der folgenden Gruppe:
Verbindungen des ein- oder zweiwertigen Kupfers, insbesondere Salze des ein-oder zweiwertigen Kupfers mit anorganischen oder organischen Säuren oder ein-oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, wobei besonders bevorzugt die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat sind, oder Mischungen dieser Verbindungen, wobei diese Kupfer-Verbindungen als solche oder bevorzugtermassen in Form von Konzentraten eingesetzt werden, wobei unter Konzentrat ein Polymer, vorzugsweise gleicher oder im wesentlichen gleicher chemischer Natur wie Komponente (A), zu verstehen ist, welches das Kupfersalz in hoher Konzentration enthält, und wobei insbesondere bevorzugtermassen die Kupferverbindungen in Kombination mit weiteren Metallhalogeniden, einschliesslich Alkalihalogeniden, wie Nal, KI, NaBr, KBr, eingesetzt werden, wobei das molare Verhältnis von Metallhalogenid zu Kupfer 0,5 bis 20, bevorzugt 1 bis 10 und besonders bevorzugt 2 bis 5 beträgt;
Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen;
Stabilisatoren auf Basis sterisch gehinderter Phenole, wobei diese Stabilisatoren vorzugsweise in einer Menge von 0,1 bis 1,5, bevorzugt von 0,2 bis 1 Gew.-% vorliegen;
Phosphiten und Phosphoniten, sowie
Mischungen der vorstehend genannten Stabilisatoren.

12. Polyamidformmasse nach einem der vorhergehenden Ansprüche, **dadurch gekennzeichnet, dass** die **Komponente (E)** in einem Anteil, bezogen auf die Summe der Komponenten (A)-(E), im Bereich 0.1-4 Gew.-%, insbesondere bevorzugt im Bereich von 0.2-3 Gew.-%, vorliegt,
und/oder dass die Komponente (E) ausgewählt ist aus der folgenden Gruppe: aliphatische Polyamide, Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Russ, Graphit, Kohlenstoffnanoröhrchen, Residuen aus Polymerisationsverfahren wie Katalysatoren, Salze und deren Derivate

13. **Formkörper** aus einer Polyamidformmasse nach einem der vorhergehenden Ansprüche oder aufweisend wenigstens einen Bereich oder eine Beschichtung aus einer Polyamidformmasse nach einem der vorhergehenden Ansprüche, vorzugsweise hergestellt durch Spritzguss, Extrusion oder Blasformen, wobei es sich vorzugsweise um einen Formkörper im Kühlmittelkreislauf handelt, vorzugsweise von Automobilen, insbesondere um Kühlmittelverteiler, Kühlflüssigkeitsleitungen, Wasseraus- und -einlässe, Thermostate, Kühler, Kühlwasserkästen, Pumpen, Ventile und Konnektoren im Kühlmittelkreislauf oder Elemente dieser Bauteile, oder in Form von Kraftstoffleitungen, Hydraulikleitungen, Bremsleitungen, Kupplungsleitungen, Harnstoffleitungen oder, Bremsflüssigkeitsbehälter oder Kraftstoffbehälter.

14. Formkörper nach Anspruch 13, **dadurch gekennzeichnet, dass** es sich um einen Formkörper für Anwendungen im Sanitärbereich, also mit Kontakt zu Kühlflüssigkeiten oder warmen/heissen wasserhaltigen Medien oder Heisswasser oder Warmwasser handelt, vorzugsweise ausgewählt aus der folgenden Gruppe:
Sanitärbauteile wie insbesondere Wasserzähler, Wasserzählergehäuse, und Wasserzählerkomponenten, einschliesslich Lager, Propeller, Pilone, Rohre, Leitungen, Rohrverbinder, Fittinge, insbesondere für die Trinkwasseranwendung, Ventile, Armaturen,
einschliesslich Formkörper im Kontakt mit Warmwasser in der Wasserversorgung, wie insbesondere Warmwasserspeicher, und in Heiz-und Kühlsystemen insbesondere Öl-, Gas-, Holz- und Solarheizungen sowie Wärmepumpen und Raumheizungen,
Formkörper für Kühlsysteme insbesondere Systeme im Automobilbau, wie insbesondere Kühlwasserpumpen, wobei Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen bevorzugt sind,
Haushaltsgeräte, einschliesslich Heisswasserbereiter, Reiskocher, Dampfgarer, Dampfbügeleisen, Teile für Tee- und Kaffeemaschinen,
Steckverbindungen, Konnektoren, einschliesslich solcher für Benzin-, Diesel-, Harnstoff- und Druckluftleitungen,
Profile, Folien oder Schichten von Mehrschichtfolien,
elektronische Bauteile, Scheinwerfergehäuse, Reflektoren, Kurvenlichtverstellung, Zahnräder, Gehäuse für elektronische Bauteile, Werkzeuge, Verbundwerkstoffe, Kunststoff-Kautschuk-Verbunde, Stutzen sowie Fittings zum Verbinden von Schläuchen oder Rohren.

15. **Verwendung** einer Polyamidformmasse nach einem der Ansprüche 1-12 zur Herstellung eines Formkörpers nach einem der Ansprüche 13-14,

16. Verwendung eines Formkörpers nach einem der Ansprüche 13-14 als Bauteil im Automobilbereich für den Kontakt mit Kühlflüssigkeit, insbesondere ausgewählt aus der Gruppe Wasser, Glykol, und Mischungen davon.

17. **Verfahren** zur Herstellung einer Polyamidformmasse nach einem der Ansprüche 1-12, **dadurch gekennzeichnet, dass**
entweder 1,6-Hexandiamin, Terephthalsäure, Isophthalsäure, und Dodecandisäure sowie gegebenenfalls Adipinsäure (C6), Korksäure (C8), Azelainsäure (C9) oder Sebazinsäure (C10), oder ε-Caprolactam (C6) als Monomere vorgelegt werden, gegebenenfalls als Salze des Diamins mit den entsprechenden Disäuren, und in einem einstufigen Verfahren oder in einem 2-stufigen Verfahren mit Vorkondensat-Bildung in der 1. Stufe und abschliessender Polymerisation in der 2. Stufe zur Komponente (A) polymerisiert werden und anschliessend oder im Rahmen der genannten 2. Stufe die weiteren Bestandteile (B)-(E) hinzugefügt werden;
oder dass die Bestandteile (a1) bis (a4) jeweils in Form vorgeformter Blöcke zum Polyamid (A) umgesetzt werden, und anschliessend und/oder im Rahmen der genannten Umsetzung der Blöcke und/oder bereits bei der Bereitstellung der Blöcke die weiteren Bestandteile (B)-(E) hinzugefügt werden;
wobei bei der Polymerisation vorzugsweise eine anorganische oder organische Phosphorverbindung eingesetzt wird, wobei der Phosphorgehalt bezogen auf den wasserfreien Ansatz bevorzugtermassen im Bereich von 40 - 400 ppm (ppm jeweils gewichtsbezogen), bevorzugt 60 - 300 ppm und insbesondere im Bereich von 70 bis 150 ppm liegt, und wobei bevorzugte Phosphorverbindungen Phosphorsäure, phosphorige Säure, hypophosphorige Säure, Phenylphosphonsäure, Phenylphosphinsäure und/oder deren Salze mit 1- bis 3-wertigen Kationen wie insbesondere Na, K, Mg, Ca, Zn oder Al und/oder deren Ester wie Triphenylphosphat, Triphenylphosphit oder Tris-(nonylphenyl)-phosphit oder Mischungen davon sind.

18. **Verfahren** zur Herstellung eines Formkörpers nach einem der Ansprüche 13-14, **dadurch gekennzeichnet, dass** eine Formmasse nach einem der Ansprüche 1-12 in aufgeschmolzener Form vorgelegt wird und das Formteil in einem Extrusionsverfahren, einem Spritzgussverfahren oder einem Blasformverfahren aus dieser Formmasse gebildet wird.

## Claims

1. Polyamide moulding compound consisting of the following components (A)-(E):
(A) 40 - 70 wt.% of at least one partially crystalline, partially aromatic polyamide, made up of:
(a1) 60 to 75 wt.% of 6T units, formed from 1,6-hexanediamine and terephthalic acid;
(a2) 20 to 35 wt.% of 6I units, formed from 1,6-hexanediamine and isophthalic acid;
(a3) 3 to 15 wt.% of 612 units, formed from 1,6-hexanediamine and dodecanedioic acid; and
(a4) 0 to 5 wt.% of one of the following units: 66 units, formed from 1,6-hexanediamine and adipic acid; 68 units, formed from 1,6-hexanediamine and suberic acid; 69 units formed from 1,6-hexanediamine and azelaic acid; 610 units formed from 1,6-hexanediamine and sebacic acid; 6 units formed from ε-caprolactam; or a mixture of such units;
wherein the sum of the components (a1) to (a4) makes up 100 wt.% of the polyamide (A);
(B) 30 - 60 wt.% of fibrous reinforcing materials;
(C) 0 - 30 wt.% of particulate fillers different from (B), (D) and (E);
(D) 0 - 2.0 wt.% of heat stabilizers; and
(E) 0 - 6 wt.% of auxiliary agents and/or additives, different from (A)-(D);
wherein the sum of the components (A)-(E) makes up 100 wt.%.

2. Polyamide moulding compound according to Claim 1, **characterized in that** the sum of the components (a3) and (a4), based on 100 wt.% of the polyamide (A), lies in the range from 5-15 wt.%, preferably in the range from 8-12 wt.%.

3. Polyamide moulding compound according to one of the previous claims, **characterized in that** the partially crystalline, partially aromatic polyamide der component (A) is made up of:
(a1) 60 to 70 wt.%, preferably 62-68 wt.%, particularly preferably 63-66 wt.%, of 6T units, formed from 1,6-hexanediamine and terephthalic acid;
(a2) 20 to 30 wt.%, preferably 23-29 wt.%, particularly preferably 24-27 wt.%, of 61 units, formed from 1,6-hexanediamine and isophthalic acid;
(a3) 4 to 15 wt.%, preferably 5-13 wt.%, particularly preferably 7-13 or 8-12 wt.%, of 612 units, formed from 1,6-hexanediamine and dodecanedioic acid;
(a4) 0 to 5 wt.%, preferably 0-4 wt.% , particularly preferably 0.5-3 or 1-3 wt.%, of one of the following units: 66 units, formed from 1,6-hexanediamine and adipic acid; 68 units, formed from 1,6-hexanediamine and suberic acid; 69 units formed from 1,6-hexanediamine and azelaic acid; 610 units formed from 1,6-hexanediamine and sebacic acid; 6 units formed from ε-caprolactam; or a mixture of such units, wherein it is particularly preferable that there are no (a4) units;
wherein the sum of the components (a1) to (a4) makes up 100 wt.% of the polyamide (A).

4. Polyamide moulding compound according to one of the previous claims, **characterized in that** the constituent (a4) of the partially crystalline, partially aromatic polyamide of component (A) is one of the following units: 66 units, formed from 1,6-hexanediamine and adipic acid; 6 units formed from ε-caprolactam; or a mixture of such units, wherein preferably the constituent (a4) is exclusively provided by 66 units, formed from 1,6-hexanediamine and adipic acid, preferably in a proportion in the range from 0-5 wt.%, preferably 0-4 wt.% , particularly preferably 0.5-3 wt.%.

5. Polyamide moulding compound according to one of the previous claims, **characterized in that** the molecular mass and/or the terminal groups are adjusted by means of at least one aliphatic, cycloaliphatic or aromatic monofunctional carboxylic acid, preferably selected from the following group: acetic acid, propionic acid, stearic acid, 2-ethylhexanoic acid, cyclohexanoic acid and benzoic acid or mixtures thereof, wherein the mole ratio of the monofunctional carboxylic acid to 1,6-hexanediamine lies in the range from 0.5-5 mol.%, preferably in the range from 1.0-2.5 mol.%, particularly preferably in the range from 1.4-1.9 mol.%;
and/or that the mole ratio of 1,6-hexanediamine to the sum of the dicarboxylic acids used is at least 1.01, especially at least 1.03, preferably at most 1.15, wherein particularly preferable ranges for the ratio of diamine to dicarboxylic acids are selected as follows: 1.03 to 1.10, especially 1.04 to 1.08.

6. Polyamide moulding compound according to one of the previous claims, **characterized in that** the component (A) and/or the polyamide moulding compound as a whole has a melting point, determined according to ISO Standard 11357-3 on granules using differential scanning calorimetry (DSC) with a heating rate of 20°C/min, in the range from 295-320°C, preferably in the range from 300-315°C;
and/or that the component (A) and/or the polyamide moulding compound as a whole has a glass transition temperature, determined according to ISO Standard 11357-2 on the granules using differential scanning calorimetry (DSC) with a heating rate of 20°C/min, in the range from at least 100°C and at most 130°C, in particular in the range from 105-127°C or 110-125°C, preferably in the range from 120-125°C;
and/or that the component (A) and/or the polyamide moulding compound as a whole has a water absorption, after storage at 95°C in water over a period of 336 hours, of at most 3.5%, preferably at most 3.4%, particularly preferably at most 3.35%;
and/or that the component (A) and/or the polyamide moulding compound as a whole has a strain at break, measured according to ISO 527 with a drawing speed of 5 mm/min, at a temperature in the range from 120-140°C, preferably at a temperature of 130°C, of at least 6.0%, preferably at least 6.5% or at least 7%, particularly preferably in the range from 6-10%;
and/or that the component (A) and/or the polyamide moulding compound as a whole has a strain at break, measured according to ISO 527 with a drawing speed of 5 mm/min, after storage at a temperature of 130°C for 1008 hours according to GM Standard GMW15468 (2011) in a glycol-water mixture (1:1), of at least 2.0%, preferably at least 2.3%, particularly preferably in the range from 2.3-4%;
and/or that the component (A) and/or the polyamide moulding compound as a whole has a solution viscosity (ηᵣₑₗ), measured according to DIN EN ISO 307, in 0.5 wt.% m-cresol solution, temperature 20°C, granules, between 1.4 and 2.0, particularly preferably between 1.50 and 1.80;
and/or that the component (A) and/or the polyamide moulding compound as a whole has an enthalpy of fusion, determined according to ISO Standard 11357-3 on the granules using differential scanning calorimetry (DSC) with a heating rate of 20°C/min, in the range from 20-55 J/g, in particular in the range from 25-45 J/g.

7. Polyamide moulding compound according to one of the previous claims, **characterized in that** the component (B) is present in a proportion, based on the sum of the components (A)-(E), in the range from 33-55 wt.%, preferably in the range from 35-45 wt.%.

8. Polyamide moulding compound according to one of the previous claims, **characterized in that** the component (B) is made up of glass fibres or contains glass fibres, wherein
the glass fibres have a circular cross-section, particularly preferably with a diameter in the range from 5-20 µm or in the range from 5-13 µm or 6-10 µm,
or a non-circular cross-section, wherein the dimensional ratio of the major cross-section axis to the minor cross-section axis standing perpendicular thereto is preferably greater than 2.5, particularly preferably in the range from 2.5-6 or 3-5.

9. Polyamide moulding compound according to one of the previous claims, **characterized in that** the **component (C)** is present in a proportion, based on the sum of the components (A)-(E), in the range from at most 20 wt.%, preferably in the range from at most 10 wt.%, particularly preferably in the range from 0.1-5 wt.%.

10. Polyamide moulding compound according to one of the previous claims, **characterized in that** the component (C) contains spheroidal and/or ellipsoidal fillers or is made up of these, wherein preferably silicate, metal, plastic, metal oxide, glass, mineral substance, dye, pigment particles and mixtures thereof are used, wherein the fillers of component (C) are particularly preferably as fillers, in surface-treated or untreated form, selected from the group consisting of: talc, mica, silica, such as especially iron aluminium silicate and/or sodium aluminium silicate particles, quartz, quartz powder, titanium dioxide, wollastonite, kaolin, silicic acids, especially amorphous silicic acids, ground or precipitated calcium carbonate, magnesium carbonate, magnesium hydroxide, chalk, limestone, feldspar, mica, barium sulphate, barium titanate, zinc sulphide, glass beads, in particular solid or hollow glass beads, ground glass, in particular ground glass fibres, glass scales, glass flakes, permanent magnetic or magnetizable metal compounds or alloys, inorganic pigments such as in particular iron oxide, iron manganese oxide, metal powders, especially iron powder, copper powder, aluminium powder, metal flakes, in particular aluminium flakes, iron flakes, metal-coated fillers, metal oxides, in particular spinels, such as in particular copper iron spinel, copper chromium oxide, copper chromite (CuCr2O4), zinc-iron oxide, cobalt-chromium oxide, cobalt-aluminium oxide, magnesium aluminium oxide, copper-chromium-manganese mixed oxides, copper-manganese-iron mixed oxides, nickel-antimony titanate, chromium antimony titanate, hard or soft magnetic metals or alloys or ceramics, hollow sphere silicate fillers, aluminium oxide, boron nitride, boron carbide, aluminium nitride, calcium fluoride, and mixtures of the components from this group.

11. Polyamide moulding compound according to one of the previous claims, **characterized in that** the **component (D)** is present in a proportion, based on the sum of the components (A)-(E), in the range 0.1-2.0 wt.%, particularly preferably in the range from 0.2-1.5 wt.%,
or **in that** the component (D) is selected from the following group:
compounds of mono or divalent copper, in particular salts of mono or divalent copper with inorganic or organic acids or mono or divalent phenols, the oxides of mono or divalent copper, or the complex compounds of copper salts with ammonia, amines, amides, lactams, cyanides or phosphines, preferably Cu(I) or Cu(II) salts of the hydrogen halide acids, hydrogen cyanide acids or the copper salts of the aliphatic carboxylic acids, wherein particularly preferably the monovalent copper compounds are CuCl, CuBr, CuI, CuCN and Cu2O, and the divalent copper compounds CuCl2, CuSO4, CuO, copper(II) acetate or copper(II) stearate, or mixtures of these compounds, wherein these copper compounds are used as such or preferably in the form of concentrates, wherein concentrate is to be understood to mean a polymer, preferably of the same or essentially the same chemical nature as component (A), which contains the copper salt at high concentration, and wherein particularly preferably the copper compounds are used in combination with further metal halides, including alkali metal halides, such as NaI, KI, NaBr and KBr, wherein the molar ratio of metal halide to copper is 0.5 to 20, preferably 1 to 10 and particularly preferably 2 to 5;
stabilizers based on secondary aromatic amines, wherein these stabilizers are preferably present in a quantity of 0.2 to 2, preferably 0.2 to 1.5 wt.%;
stabilizers based on sterically hindered phenols, wherein these stabilizers are preferably present in a quantity of 0.1 to 1.5, preferably 0.2 to 1 wt.%;
phosphites and phosphonites and
mixtures of the aforesaid stabilizers.

12. Polyamide moulding compound according to one of the previous claims, **characterized in that** the **component (E)** is present in a proportion, based on the sum of the components (A)-(E), in the range 0.1-4 wt.%, particularly preferably in the range from 0.2-3 wt.%,
and/or that the component (E) is selected from the following group: aliphatic polyamides, crystallization accelerators or retardants, flow aids, lubricants, parting agents, pigments, dyes and marking substances, processing aids, antistatic agents, carbon black, graphite, carbon nanotubes, residues from polymerization processes such as catalysts, salts and derivatives thereof

13. **Moulded body** from a polyamide moulding compound according to one of the previous claims or having at least one region or one coating of a polyamide moulding compound according to one of the previous claims, preferably produced by injection moulding, extrusion or blow-moulding, wherein it is preferably a moulded body in the coolant circuit, preferably of automobiles, in particular coolant manifolds, coolant fluid lines, water inlets and outlets, thermostats, coolers, cooling water boxes, pumps, valves and connectors in the coolant circuit or components of these parts, or in the form of fuel lines, hydraulic lines, brake lines, clutch lines, urea lines or brake fluid tanks or fuel tanks.

14. Moulded body according to Claim 13, **characterized in that** it is a moulded body for applications in the sanitary field, thus with contact with cooling fluids or warm/hot water-containing media or hot water or warm water, preferably selected from the following group:
sanitary components such as in particular water meters, water meter housings and water meter components, including in particular bearings, propellers, uprights, pipe couplings, fittings, in particular for drinking water use, valves, taps,
including moulded bodies in contact with hot water in the water supply, such as in particular hot water tanks, and in heating and cooling systems in particular oil, gas, wood and solar heating systems and heat pumps and space heating,
moulded bodies for cooling systems in particular systems in automobile production, such as in particular cooling water pumps, wherein moulded bodies in the form of or as part of a component for the automotive sector, in particular selected from cylinder head covers, engine covers, housings for intercoolers, intercooler valves, induction pipes, induction manifolds, connectors, gear wheels, fan wheels, cooling water tanks, housings or housing parts for heat exchangers, coolant coolers, intercoolers, thermostats, water pumps, radiators, and mounting parts are preferred,
domestic appliances, including water heaters, rice cookers, steam cookers, steam irons, parts for tea and coffee machines,
plug-in connectors, connectors, including those for petrol, diesel, urea and compressed air lines,
profiles, sheets or layers of multilayer sheets,
electronic components, headlamp housing, reflectors, adaptive headlight systems, gear wheels, housing for electronic components, tools, composite materials, plastic-rubber composites, nozzles, and fittings for connecting hoses or pipes.

15. Use of a polyamide moulding compound according to one of Claims 1-12 for the production of a moulded body according to one of Claims 13-14,

16. Use of a moulded body according to one of Claims 13-14 as a component in the automotive sector for contact with coolant liquid, in particular selected from the group water, glycol, and mixtures thereof.

17. **Method** for producing a polyamide moulding compound according to one of Claims 1-12, **characterized in that**
either 1,6-hexanediamine, terephthalic acid, isophthalic acid, and dodecanedioic acid and optionally adipic acid (C6), suberic acid (C8), azelaic acid (C9) or sebacic acid (C 10), and/or ε-caprolactam (C6) are taken as monomers, optionally as salts of the diamine with the appropriate diacids, and in a one-stage process or in a two-stage process with precondensate formation in the first stage and concluding polymerization in the second stage are polymerized to the component (A) and then or during the said second stage the further constituents (B)-(E) are added;
or that the constituents (a1) to (a4), each in the form of preformed blocks are converted to the polyamide (A), and then and/or during and/or during the said conversion of the blocks and/or already in the preparation of the blocks, the further constituents (B)-(E) are added;
wherein in the polymerization a inorganic or organic phosphorus compound is preferably used, wherein the phosphorus content based on the water-free batch preferably lies in the range from 40-400 ppm (ppm, each weight-based), preferably 60-300 ppm and in particular in the range from 70 to 150 ppm, and wherein preferred phosphorus compounds are phosphoric acid, phosphorous acid, hypophosphorous acid, phenylphosphonic acid, phenylphosphinic acid and/or salts thereof with 1-3-valent cations such as in particular Na, K, Mg, Ca, Zn or Al and/or esters thereof such as triphenyl phosphate, triphenyl phosphite or tris-(nonylphenyl) phosphite or mixtures thereof.

18. **Method** for the production of a moulded body according to one of Claims 13-14, **characterized in that** a moulding compound according to one of Claims 1-12, is taken in molten form and the moulded part is formed from this moulding compound in an extrusion process, an injection moulding process or a blow-moulding process.

## Revendications

1. Masse de moulage de polyamide constituée par les constituants suivants (A)-(E) :
(A) 40-70% en poids d'au moins un polyamide partiellement cristallin, partiellement aromatique, formé à partir de :
(a1) 60 à 75% en mole d'unités 6T, formées à partir de 1,6-hexanediamine et d'acide téréphtalique ;
(a2) 20 à 35% en mole d'unités 61, formées à partir de 1,6-hexanediamine et d'acide isophtalique ;
(a3) 3 à 15% en mole d'unités 612, formées à partir de 1,6-hexanediamine et d'acide dodécanedioïque ;
(a4) 0 à 5% en poids d'une des unités suivantes : les unités 66, formées à partir de 1,6-hexanediamine et d'acide adipique ; les unités 68, formées à partir de 1,6-hexanediamine et d'acide subérique ; les unités 69 formées à partir de 1,6-hexanediamine et d'acide azélaïque ; les unités 610 formées à partir de 1,6-hexanediamine et d'acide sébacique ; les unités 6 formées à partir d'ε-caprolactame ; ou d'un mélange de ces unités ;
la somme des composants (a1) à (a4) représentant 100% en poids du polyamide (A) ;
(B) 30-60% en poids d'agents de renforcement sous forme de fibres ;
(C) 0-30% en poids de charges particulaires, différentes de (B), de (D) et de (E) ;
(D) 0-2,0% en poids de stabilisants à la chaleur ;
(E) 0-6% en poids d'adjuvants et/ou d'additifs, différents de (A)-(D) ;
la somme des composants (A)-(E) valant 100% en poids.

2. Masse de moulage de polyamide selon la revendication 1, **caractérisée en ce que** la somme des composants (a3) et (a4), par rapport aux 100% en poids du polyamide (A), se situe dans la plage de 5-15% en poids, de préférence dans la plage de 8-12% en poids.

3. Masse de moulage de polyamide selon l'une quelconque des revendications précédentes, **caractérisée en ce que** le polyamide partiellement cristallin, partiellement aromatique du composant (A) est formé à partir de :
(a1) 60 à 70% en poids, de préférence 62-68% en poids, en particulier de préférence 63-66% en poids, d'unités 6T, formées à partir de 1,6-hexanediamine et d'acide téréphtalique ;
(a2) 20 à 30% en poids, de préférence 23-29% en poids, en particulier de préférence 24-27% en poids, d'unités 61, formées à partir de 1,6-hexanediamine et d'acide isophtalique ;
(a3) 4 à 15% en poids, de préférence 5-13% en poids, en particulier de préférence 7-13 ou 8-12% en poids, d'unités 612, formées à partir de 1,6-hexanediamine et d'acide dodécanedioïque ;
(a4) 0 à 5% en poids, de préférence 0-4% en poids, en particulier de préférence 0,5-3 ou 1-3% en poids, d'une des unités suivantes : des unités 66, formées à partir de 1,6-hexanediamine et d'acide adipique ; des unités 68, formées à partir de 1,6-hexanediamine et d'acide subérique ; des unités 69 formées à partir de 1,6-hexanediamine et d'acide azélaïque ; des unités 610 formées à partir de 1,6-hexanediamine et d'acide sébacique ; des unités 6 formées à partir d'ε-caprolactame ; ou d'un mélange de ces unités, l'absence d'unités (a4) étant particulièrement préférée ;
la somme des composants (a1) à (a4) représentant 100% en poids du polyamide (A).

4. Masse de moulage de polyamide selon l'une quelconque des revendications précédentes, **caractérisée en ce que** le constituant (a4) du polyamide partiellement cristallin, partiellement aromatique du composant (A) est l'une des unités suivantes : les unités 66, formées à partir de 1,6-hexanediamine et d'acide adipique ; les unités 6 formées à partir d'ε-caprolactame ; ou un mélange de ces unités, le constituant (a4) étant de préférence exclusivement constitué par des unités 66, formées à partir de 1,6-hexanediamine et d'acide adipique, de préférence en une proportion dans la plage de 0-5% en poids, de préférence de 0-4% en poids, en particulier de préférence de 0,5-3% en poids.

5. Masse de moulage de polyamide selon l'une quelconque des revendications précédentes, **caractérisée en ce que** la masse molaire et/ou les groupes terminaux sont réglés par au moins un acide carboxylique monofonctionnel aliphatique, cycloaliphatique ou aromatique, de préférence choisi dans le groupe suivant : acide acétique, acide propionique, acide stéarique, acide 2-éthylhexanoïque, acide cyclohexanoïque et acide benzoïque ou leurs mélanges, le rapport molaire de l'acide carboxylique monofonctionnel à la 1,6-hexanediamine se situant dans la plage de 0,5-5% en mole, de préférence dans la plage de 1,0-2,5% en mole, en particulier de préférence dans la plage de 1,4-1,9% en mole ;
et/ou **en ce que** le rapport molaire de la 1,6-hexanediamine à la somme des acides dicarboxyliques utilisés est d'au moins 1,01, en particulier d'au moins 1,03, de préférence d'au plus 1,15, des plages pour le rapport de la diamine aux acides dicarboxyliques étant de manière particulièrement préférée choisies comme suit : 1,03 à 1,10, en particulier 1,04 à 1,08.

6. Masse de moulage de polyamide selon l'une quelconque des revendications précédentes, **caractérisée en ce que** le composant (A) et/ou la masse de moulage de polyamide dans sa totalité présente(nt) un point de fusion, déterminé selon la norme ISO 11357-3 sur le granulat avec utilisation de la calorimétrie différentielle à balayage (Differential Scanning Calorimetry - DSC) à une vitesse de chauffage de 20°C/min, dans la plage de 295-320°C, de préférence dans la plage de 300-315°C ;
et/ou **en ce que** le composant (A) et/ou la masse de moulage de polyamide dans sa totalité présente(nt) une température de transition vitreuse, déterminée selon la norme ISO 11357-2 sur le granulat avec utilisation de la calorimétrie différentielle à balayage (Differential Scanning Calorimetry - DSC) à une vitesse de chauffage de 20°C/min, dans la plage d'au moins 100°C et d'au plus 130°C, en particulier dans la plage de 105-127°C ou de 110-125°C, de préférence dans la plage de 120-125°C ;
et/ou **en ce que** le composant (A) et/ou la masse de moulage de polyamide dans sa totalité présente(nt) une absorption d'eau, après un entreposage à 95°C dans l'eau sur une durée de 336 heures d'au plus 3,5%, de préférence d'au plus 3,4%, en particulier de préférence d'au plus 3,35% ;
et/ou **en ce que** le composant (A) et/ou la masse de moulage de polyamide dans sa totalité présente(nt) un allongement à la rupture, mesuré selon la norme ISO 527 à une vitesse de traction de 5 mm/min, à une température dans la plage de 120-140°C, de préférence à une température de 130°C, d'au moins 6,0%, de préférence d'au moins 6,5% ou d'au moins 7%, en particulier de préférence dans la plage de 6-10% ;
et/ou **en ce que** le composant (A) et/ou la masse de moulage de polyamide dans sa totalité présente(nt) un allongement à la rupture, mesuré selon la norme ISO 527 à une vitesse de traction de 5 mm/min, après un entreposage à une température de 130°C pendant 1008 heures selon la norme GM GMW15468 (2011) dans un mélange glycol-eau (1:1), d'au moins 2,0%, de préférence d'au moins 2,3%, en particulier de préférence dans la plage de 2,3-4% ;
et/ou **en ce que** le composant (A) et/ou la masse de moulage de polyamide dans sa totalité présente(nt) une viscosité en solution (ηᵣₑₗ), mesurée selon la norme DIN EN ISO 307, dans une solution à 0,5% en poids de m-crésol, à une température de 20°C, sur un granulat, entre 1,4 et 2,0, en particulier de préférence entre 1,50 et 1,80 ; **en ce que** le composant (A) et/ou la masse de moulage de polyamide dans sa totalité présente(nt) une enthalpie de fusion, déterminée selon la norme ISO 11357-3 sur le granulat avec utilisation de la calorimétrie différentielle à balayage (Differential Scanning Calorimetry - DSC) à une vitesse de chauffage de 20°C/min, dans la plage de 20-55 J/g, de préférence dans la plage de 25-45 J/g.

7. Masse de moulage de polyamide selon l'une quelconque des revendications précédentes, **caractérisée en ce que** le composant (B) est présent en une proportion, par rapport à la somme des composants (A)-(E), dans la plage de 33-55% en poids, de préférence dans la plage de 35-45% en poids.

8. Masse de moulage de polyamide selon l'une quelconque des revendications précédentes, **caractérisée en ce que** le composant (B) est formé à partir de fibres de verre ou contient des fibres de verre, les fibres de verre présentant un section circulaire, en particulier de préférence d'un diamètre dans la plage de 5-20 µm ou dans la plage de 5-13 µm ou de 6-10 µm, ou une section non circulaire, le rapport des dimensions de l'axe transversal principal à l'axe transversal secondaire perpendiculaire à celui-ci étant de préférence supérieur à 2,5, en particulier de préférence situé dans la plage de 2,5-6 ou 3-5.

9. Masse de moulage de polyamide selon l'une quelconque des revendications précédentes, **caractérisée en ce que** le composant (C) est présent en une proportion, par rapport à la somme des composants (A)-(E), dans la plage d'au plus 20% en poids, de préférence dans la plage d'au plus 10% en poids, en particulier de préférence dans la plage de 0,1-5% en poids.

10. Masse de moulage de polyamide selon l'une quelconque des revendications précédentes, **caractérisée en ce que** le composant (C) contient des charges sphéroïdes et/ou ellipsoïdes ou est formé à partir de celles-ci, des particules de silicate, de métal, de matériau synthétique, d'oxyde métallique, de verre, de substance minérale, de colorant ou pigmentaires ainsi que des mélanges de ces particules étant de préférence utilisés, les charges du composant (C) étant choisies, en particulier de préférence en tant que charges, sous forme à surface traitée ou non traitée, dans le groupe constitué par : le talc, le mica, le silicate, comme en particulier les particules en aluminosilicate de fer et/ou en aluminosilicate de sodium, le quartz, la farine de quartz, le dioxyde de titane, la wollastonite, le kaolin, les silices, en particulier les silices amorphes, le carbonate de calcium broyé ou précipité ou le carbonate de magnésium, l'hydroxyde de magnésium, la craie, le calcaire, le feldspath, le mica, le sulfate de baryum, le titanate de baryum, le sulfure de zinc, les billes de verre, en particulier les billes de verre pleines ou creuses, le verre broyé, en particulier les fibres de verre broyées, les paillettes de verre, les flocons de verre, les composés métalliques et/ou les alliages magnétiques permanents ou magnétisables, les pigments inorganiques, tels qu'en particulier l'oxyde de fer, l'oxyde de fer-manganèse, les poudres métalliques, en particulier la poudre de fer, la poudre de cuivre, la poudre d'aluminium, les flocons métalliques, en particulier les flocons d'aluminium, les flocons de fer, les charges revêtues de métal, les oxydes métalliques, en particulier les spinelles, tels qu'en particulier le spinelle de cuivre-fer, l'oxyde de cuivre-chrome, le chromite de cuivre (CuCr₂O₄), l'oxyde de zinc-fer, l'oxyde de cobalt-chrome, l'oxyde de cobalt-aluminium, l'oxyde de magnésium-aluminium, les oxydes mixtes de cuivre-chrome-manganèse, les oxydes mixtes de cuivre-manganèse-fer, le titanate de nickel-antimoine, le titanate de chrome-antimoine, les métaux ou les alliages magnétiques durs ou doux ou, selon le cas, les céramiques, les charges silicatées sphériques creuses, l'oxyde d'aluminium, le nitrure de bore, le carbure de bore, le nitrure d'aluminium, le fluorure de calcium ainsi que les mélanges des éléments de ce groupe.

11. Masse de moulage de polyamide selon l'une quelconque des revendications précédentes, **caractérisée en ce que** le composant (D) est présent en une proportion, par rapport à la somme des composants (A)-(E), dans la plage de 0,1-2,0% en poids, en particulier de préférence dans la plage de 0,2-1,5% en poids, ou **en ce que** le composant (D) est choisi dans le groupe suivant : les composés du cuivre monovalent ou divalent, en particulier les sels du cuivre monovalent ou divalent avec des acides inorganiques ou organiques ou des phénols monovalents ou divalents, les oxydes du cuivre monovalent ou divalent ou les composés complexes de sels de cuivre avec de l'ammoniaque, des aminés, des amides, des lactames, des cyanures ou des phosphines, de préférence les sels de Cu(I) ou de Cu(II) d'acides halogénohydriques, d'acides cyanhydriques ou les sels de cuivre d'acides carboxyliques aliphatiques, les composés du cuivre monovalent étant de manière particulièrement préférée CuCl, CuBr, CuI, CuCN et Cu₂O et les composés du cuivre divalent étant de manière particulièrement préférée CuCl₂, CuSO₄, CuO, acétate de cuivre (II) ou stéarate de cuivre (II) ou les mélanges de ces composés, ces composés du cuivre étant utilisés tels quels ou de préférence sous forme de concentrats, un concentrat désignant un polymère, de préférence de nature chimique identique ou essentiellement identique à celle du composant (A), qui contient le sel de cuivre en une concentration élevée et les composés de cuivre étant en particulier de préférence utilisés en combinaison avec d'autres halogénures métalliques, y compris les halogénures de métal alcalin, tels que NaI, KI, NaBr, KBr, le rapport molaire de l'halogénure métallique au cuivre étant de 0,5 à 20, de préférence de 1 à 10 et de manière particulièrement préférée de 2 à 5 ; les stabilisants à base d'amines aromatiques secondaires, ces stabilisants étant de préférence présents en une quantité de 0,2 à 2, de préférence de 0,2 à 1,5% en poids ; les stabilisants à base de phénols stériquement encombrés, ces stabilisants se trouvant de préférence en une quantité de 0,1 à 1,5, de préférence de 0,2 à 1% en poids ; les phosphites et les phosphonites ainsi que les mélanges des stabilisants susmentionnés.

12. Masse de moulage de polyamide selon l'une quelconque des revendications précédentes, **caractérisée en ce que** le composant (E) est présent en une proportion, par rapport à la somme des composants (A)-(E), dans la plage de 0,1-4% en poids, en particulier de préférence dans la plage de 0,2-3% en poids et/ou **en ce que** le composant (E) est choisi dans le groupe suivant : les polyamides aliphatiques, les accélérateurs ou retardateurs de cristallisation, les adjuvants d'écoulement, les lubrifiants, les agents de démoulage, les pigments, les colorants et les substances de marquage, les adjuvants de transformation, les antistatiques, la suie, le graphite, les nanotubes de carbone, les résidus de procédés de polymérisation tels que des catalyseurs, des sels et leurs dérivés.

13. Corps façonnés en une masse de moulage de polyamide selon l'une quelconque des revendications précédentes ou présentant au moins une zone ou un revêtement en une masse de moulage de polyamide selon l'une quelconque des revendications précédentes, de préférence préparés par moulage par injection, par extrusion ou par moulage par soufflage, où il s'agit de préférence d'un corps façonné dans un circuit de fluide de refroidissement, de préférence d'automobiles, en particulier de distributeurs de fluide de refroidissement, de conduites de liquide de refroidissement, de sorties et d'entrées d'eau, de thermostats, de refroidisseurs, de réservoirs à fluide de refroidissement, de pompes, de soupapes et de raccords dans le circuit de fluide de refroidissement ou d'éléments de ces pièces ou sous forme de conduites à carburant, de conduites hydrauliques, de conduites de frein, de conduites d'embrayage, de conduites à urée ou de réservoirs à liquide de frein ou de réservoirs à carburant.

14. Corps façonné selon la revendication 13, **caractérisé en ce qu'**il s'agit d'un corps façonné pour des utilisations dans le domaine sanitaire, c'est-à-dire en contact avec des liquides de refroidissement ou avec des milieux contenant de l'eau chaude/très chaude ou avec de l'eau très chaude ou chaude, de préférence choisi dans le groupe suivant :
- les pièces sanitaires telles qu'en particulier les compteurs d'eau, les boîtiers de compteur d'eau et les éléments de compteur d'eau, y compris les paliers, les hélices, les axes, les tuyaux, les conduites, les raccords tubulaires, les raccords, en particulier pour les utilisations d'eau potable, les soupapes, les robinets
- y compris les corps façonnés en contact avec l'eau chaude dans l'alimentation en eau chaude, tels qu'en particulier les accumulateurs d'eau chaude, et dans les systèmes de chauffage et de refroidissement, en particulier dans les chauffages à mazout, au gaz, au bois et solaires ainsi que les pompes à chaleur et les chauffages des locaux,
- les corps façonnés pour des systèmes de refroidissement, en particulier les systèmes dans la construction automobile, tels qu'en particulier les pompes à eau de refroidissement, les corps façonnés sous forme ou en tant que partie d'une pièce pour le domaine automobile, en particulier choisis parmi les couvercles de culasse, les capots de moteur, les boîtiers échangeurs intermédiaires, les clapets d'échangeur intermédiaire, les tubulures d'aspiration, les tubulures d'admission, les raccords, les roues dentées, les hélices, les réservoirs à fluide de refroidissement, les boîtiers et les parties de boîtiers pour échangeurs thermiques, pour refroidisseurs de fluide de refroidissement, pour échangeurs intermédiaires, les thermostats, les pompes à eau, les corps chauffants, les pièces de fixation, étant préférés,
- les appareils domestiques, y compris les chauffeeaux, les cuiseurs de riz, les cuiseurs à vapeur, les fers à vapeur, les pièces pour les machines à thé et à café,
- les fiches de raccordement, les raccords, y compris ceux pour les conduits à essence, à diesel, à urée et à air comprimé,
- les profilés, les feuilles ou les couches de feuilles multicouches,
- les pièces électroniques, les boîtiers pour projecteurs, les réflecteurs, les phares adaptatifs, les roues dentées, les boîtiers pour pièces électroniques, les outils, les matériaux composites, les composites matériau synthétique-caoutchouc, les tubulures ainsi que les raccords pour le raccordement de tuyaux ou deux tubes.

15. Utilisation d'une masse de moulage de polyamide selon l'une quelconque des revendications 1-12 pour la fabrication d'un corps façonné selon l'une quelconque des revendications 13-14.

16. Utilisation d'un corps façonné selon l'une quelconque des revendications 13-14 comme pièce dans le domaine automobile pour le contact avec un liquide de refroidissement, en particulier choisi dans le groupe formé par l'eau, le glycol et leurs mélanges.

17. Procédé pour la préparation d'une masse de moulage de polyamide selon l'une quelconque des revendications 1-12, **caractérisé en ce que**, soit on dispose au préalable de la 1,6-hexanediamine, de l'acide téréphtalique, de l'acide isophtalique et de l'acide dodécanedioïque ainsi que le cas échéant de l'acide adipique (C6), de l'acide subérique (C8), de l'acide azélaïque (C9) ou de l'acide sébacique (C10) ou de l'ε-caprolactame (C6) comme monomères, le cas échéant sous forme de sels de la diamine avec les diacides correspondants, et on polymérise dans un procédé à une étape ou dans un procédé à 2 étapes avec formation d'un précondensat dans la 1ère étape et une polymérisation finale dans la 2ème étape en composant (A) et on ajoute ensuite ou dans le cadre de ladite 2ème étape les autres constituants (B)-(E) ;
soit on transforme les constituants (a1) à (a4) à chaque fois sous forme de blocs formés au préalable en polyamide (A) et les autres constituants (B)-(E) sont ajoutés ensuite et/ou dans le cadre de la transformation mentionnée des blocs et/ou déjà lors de la préparation des blocs ;
un composé phosphoré inorganique ou organique étant de préférence utilisé lors de la polymérisation, la teneur en phosphore par rapport à la charge anhydre se situant de préférence dans la plage de 40-400 ppm (ppm à chaque fois par rapport au poids), de préférence de 60-300 ppm et en particulier dans la plage de 70 à 150 ppm, et les composés phosphorés préférés étant l'acide phosphorique, l'acide phosphoreux, l'acide hypophosphoreux, l'acide phénylphosphonique, l'acide phénylphosphinique et/ou leurs sels avec des cations monovalents à trivalents, tels qu'en particulier Na, K, Mg, Ca, Zn ou Al et/ou leurs esters tels que le phosphate de triphényle, le phosphite de triphényle ou le phosphite de tris-(nonylphényle) ou leurs mélanges.

18. Procédé pour la préparation d'un corps façonné selon l'une quelconque des revendications 13-14, **caractérisé en ce qu'**une masse de moulage selon l'une quelconque des revendications 1-12 est disposée au préalable sous forme fondue et la pièce façonnée est formée dans un procédé d'extrusion, un procédé de moulage par injection ou un procédé de moulage par soufflage à partir de cette masse de moulage.
